# EUROPEAN PATENT SPECIFICATION

(11) **EP 4 336 393 B1**
(45) Date of publication and mention of the grant of the patent: **10.06.2026**
(21) Application number: 22814904.3
(22) Date of filing: 20.04.2022
(51) Int. Cl.: G06F 21/45, H04L 9/32, H04L 9/40, G06F 21/44

(54) **SECURITY AUTHENTICATION METHOD, READABLE MEDIUM, AND ELECTRONIC DEVICE**
SICHERHEITSAUTHENTIFIZIERUNGSVERFAHREN, LESBARES MEDIUM UND ELEKTRONISCHE VORRICHTUNG
PROCÉDÉ D'AUTHENTIFICATION DE SÉCURITÉ, SUPPORT LISIBLE ET DISPOSITIF ÉLECTRONIQUE

(30) Priority: 04.06.2021 CN 202110624834
(43) Date of publication of application: 13.03.2024
(73) Proprietor: Huawei Technologies Co., Ltd., Shenzhen, Guangdong 518129 (CN)
(72) Inventor: SU, Peng, Shenzhen, Guangdong 518129 (CN)
(74) Representative: Maiwald GmbH
(86) International application number: PCT/CN2022/087971
(87) International publication number: WO 2022/252857

(56) References cited:
- EP-A1- 3 681 102
- EP-A2- 2 733 609
- CN-A- 106 487 752
- CN-A- 109 756 447
- CN-A- 109 936 547
- US-A1- 2017 237 742
- US-A1- 2021 044 976

## Description

This application claims priority to Chinese Patent Application No. 202110624834.X, filed with the China National Intellectual Property Administration on June 4, 2021 and entitled "SECURITY AUTHENTICATION METHOD, READABLE MEDIUM, AND ELECTRONIC DEVICE".

### TECHNICAL FIELD

This application relates to the field of network security, and in particular, to a security authentication method, a readable medium, and an electronic device.

### BACKGROUND

With development of internet information technologies, a daily life of a person is increasingly dependent on various intelligent electronic devices. For example, a smart household device provides a user with more intelligent home life experience. A wearable intelligent electronic device can plan a movement path for the user and monitor a health state of the user. A smartphone can provide the user with online shopping, chatting, working, learning, and other intelligent experience. However, a complex network environment, a limitation on resources of the intelligent electronic device, and another characteristic impose higher requirements on network security and power consumption of the intelligent electronic device.

For example, for an internet of things device, it is assumed that the internet of things device needs to perform business interaction with a cloud server. Usually, to ensure establishment of a secure connection between the internet of things device and the cloud server, and prevent data exchanged between the internet of things device and the cloud server from being hijacked or tampered with, security authentication needs to be separately performed on the internet of things device and the cloud server. After the authentication succeeds, business data is exchanged. However, security authentication performed on the cloud server on the internet of things device needs to use a large quantity of memory resources and computing resources of the internet of things device. Consequently, when an internet of things device connected to the cloud server has insufficient computing resources and memory resources, a speed of performing security authentication on the cloud server through the internet of things device is slow, and performance, a battery life, and the like of the internet of things device are affected.

United States patent application US 2017/0237742 A1 describes a method performed in a resource-constrained device for establishing a secure session with a service delivered by a server terminal using a security protocol over a communication network, wherein the resource-constrained device is registered at a management terminal.

European patent application EP 2 733 609 A2 describes a method for delegating tasks from a wearable electronic device.

European patent application EP 3 681 102 A1 describes a method for validation of a digital user certificate.

### SUMMARY

Embodiments of this application provide a security authentication method, a readable medium, and an electronic device. In technical solutions of this application, when a lightweight device performs data transmission with a server, an identity verification process for the server is completed by a resource-rich device. Therefore, memory resources and computing resources of the resource-rich device can be effectively used, and overall efficiency of each device in a device network can be improved. In addition, operating power consumption of the lightweight device can be reduced, and a battery life of the lightweight device can be prolonged.

The invention is set out in the appended set of claims.

According to a first aspect, an embodiment of this application provides a security authentication method, including: A first electronic device detects a trigger event triggering data transmission with a server; the first electronic device sends identity information of the server to a second electronic device; the second electronic device verifies the identity information of the server received from the first electronic device, and sends a verification result to the first electronic device; and the first electronic device determines, based on the received verification result, whether to perform the data transmission with the server.

For example, in some embodiments, the first electronic device detects a user operation that triggers a request for a video service from the server. To establish a network secure connection between the first electronic device and the server, the first electronic device needs to verify the identity information of the server. If computing resources and storage resources of the first electronic device at this time are insufficient to support the first electronic device to complete verification on the identity information of the server, or even though computing resources and storage resources of the first electronic device may support the first electronic device to complete verification on the identity information of the server, when there is a second electronic device idle or with relatively sufficient computing resources and storage resources in a local area network, an internet of things, or a device ad hoc network in which the first electronic device is located, to improve a speed of verifying the identity information of the server, and to not affect main performance of the first electronic device, the second electronic device may be used to replace the first electronic device to perform the verification on the identity information of the server.

In a possible implementation of the first aspect, the method further includes: An identity verification capability of the second electronic device is greater than that of the first electronic device.

In a possible implementation of the first aspect, the method further includes: The first electronic device sends the identity information of the server to the second electronic device when determining that the identity verification capability of the second electronic device is greater than that of the first electronic device.

In some embodiments, the first electronic device sends the identity information of the server to the second electronic device when determining that both computing power and a storage capability of the second electronic device are greater than those of the first electronic device.

In some embodiments, the first electronic device sends the identity information of the server to the second electronic device when determining that one of the computing power and the storage capability of the second electronic device is greater than that of the first electronic device.

In some embodiments, the first electronic device sends the identity information of the server to the second electronic device when determining that a comprehensive capability of the computing power and the storage capability of the second electronic device is greater than that of the first electronic device. The comprehensive capability of the computing power and the storage capability is a capability obtained after the computing power and the storage capability are comprehensively evaluated. For example, the computing power of the second electronic device is less than the computing power of the first electronic device, but the storage capability of the second electronic device is greater than the storage capability of the first electronic device, and the comprehensive capability of the computing power and the storage capability of the second electronic device is greater than that of the first electronic device. In this case, the first electronic device sends the identity information of the server to the second electronic device.

In some embodiments, the computing power and the storage capability are overall computing power and an overall storage capability of each of the first electronic device and the second electronic device.

In some embodiments, the computing power and the storage capability are available computing power and an available storage capability of each of the first electronic device and the second electronic device.

In a possible implementation of the first aspect, the method further includes: The identity verification capability is obtained based on at least one of the computing power, the storage capability, and a security capability.

For example, in some embodiments, the identity verification capability includes the computing power, the storage capability, and the security capability.

For another example, in some embodiments, the identity verification capability is comprehensively evaluated based on the computing power, the storage capability, and the security capability.

In a possible implementation of the first aspect, the method further includes: The computing power includes at least one of computing power of a central processing unit, computing power of a graphics processing unit, and computing power of an image signal processor.

For example, in some embodiments, each of the first electronic device and the second electronic device includes a central processing unit (Central Processing Unit, CPU), a graphics processing unit (graphics processing unit, GPU), and an image signal processor (image signal processor, ISP). In this case, the computing power of each of the first electronic device and the second electronic device is a sum of computing power of the CPU, computing power of the GPU, and computing power of the ISP.

In a possible implementation of the first aspect, the method further includes: That the second electronic device verifies the identity information of the server received from the first electronic device includes:

The second electronic device verifies the identity information of the server based on a root certificate received from the first electronic device.

In a possible implementation of the first aspect, the method further includes: The first electronic device includes a plurality of applications;
that a first electronic device detects a trigger event triggering data transmission with a server includes: at least one of the plurality of applications of the first electronic device detects the trigger event triggering the data transmission with the server; and
the method further includes:
   when detecting the trigger event triggering the data transmission with the server, the at least one of the plurality of applications of the first electronic device obtains the root certificate, and sends the root certificate to the second electronic device.

In a possible implementation of the first aspect, the method further includes: The identity information of the server includes a server certificate issued by a digital certificate authority to the server, and the verification result of the second electronic device for the identity information of the server is obtained in the following manner:

The second electronic device verifies, based on the root certificate received from the first electronic device, the server certificate received from the first electronic device, to obtain the verification result of the second electronic device for the server certificate.

For example, in some embodiments, when detecting the trigger event triggering the data transmission with the server, at least one of a video application, a shopping application, a game application, or a chat application of the first electronic device may obtain a same root certificate stored in the first electronic device from storage space of the first electronic device, to verify the identity information of the server by using the same root certificate. In this way, the root certificate is managed through normalization, so that the first electronic device does not need to store a plurality of root certificates that are in a one-to-one correspondence with the plurality of applications, thereby reducing memory usage of the first electronic device.

In a possible implementation of the first aspect, the method further includes: The server certificate includes a digital document, a signature generated after the digital certificate authority encrypts a digital digest that is obtained through calculation on the digital document based on a preset digest algorithm, and the preset digest algorithm.

In a possible implementation of the first aspect, the method further includes: That the second electronic device verifies the identity information of the server received from the first electronic device includes: the second electronic device decrypts the signature in the server certificate based on the root certificate received from the first electronic device, to obtain a first digital digest of the signature;
performs hash calculation on the digital document based on the preset digest algorithm to obtain a second digital digest; and
compares the second digital digest with the first digital digest, and determines the verification result of the second electronic device for the server certificate based on a comparison result.

In a possible implementation of the first aspect, the method further includes: That a first electronic device detects a trigger event triggering data transmission with a server includes:
the first electronic device detects a user operation triggering the data transmission with the server, where the user operation is used to trigger the first electronic device to send a network secure connection request to the server.

In a possible implementation of the first aspect, the method further includes: That the first electronic device determines, based on the verification result, whether to perform the data transmission with the server includes:
the first electronic device establishes a network secure connection to the server when determining, based on the verification result, that an identity of the server is valid; and
the first electronic device performs the data transmission with the server by using the established network secure connection.

In a possible implementation of the first aspect, the method further includes: The network secure connection is a secure socket layer protocol connection or a transport layer security protocol connection.

In a possible implementation of the first aspect, the method further includes: An operating system of the first electronic device is a lightweight embedded operating system.

In a possible implementation of the first aspect, the method further includes: An operating system of the second electronic device includes at least one of an Android^{™} operating system, a Harmony^{™} operating system, and an IOS^{™} operating system.

According to a second aspect, an embodiment of this application provides a security authentication method, including:

A first electronic device detects, a trigger event triggering data transmission with a server;
the first electronic device sends identity information of the server to a second electronic device; and
the first electronic device determines, based on a verification result received from the second electronic device, whether to perform the data transmission with the server.

In a possible implementation of the second aspect, the method further includes: An identity verification capability of the second electronic device is greater than that of the first electronic device.

In a possible implementation of the second aspect, the method further includes: The first electronic device sends the identity information of the server to the second electronic device when determining that the identity verification capability of the second electronic device is greater than that of the first electronic device.

In a possible implementation of the second aspect, the method further includes: The identity verification capability is obtained based on at least one of computing power, a storage capability, and a security capability.

In a possible implementation of the second aspect, the method further includes: The computing power includes at least one of computing power of a central processing unit, computing power of a graphics processing unit, and computing power of an image signal processor.

In a possible implementation of the second aspect, the method further includes: The first electronic device includes a plurality of applications;
that a first electronic device detects, a trigger event triggering data transmission with a server includes:
at least one of the plurality of applications of the first electronic device detects the trigger event triggering the data transmission with the server; and
the method further includes:
   when detecting the trigger event triggering the data transmission with the server, the at least one of the plurality of applications of the first electronic device obtains a root certificate, and sends the root certificate to the second electronic device, where the root certificate is used by the second electronic device to verify the identity information of the server. In a possible implementation of the second aspect, the method further includes: That a first electronic device detects a trigger event triggering data transmission with a server includes:
   the first electronic device detects a user operation triggering the data transmission with the server, where the user operation is used to trigger the first electronic device to send a network secure connection request to the server.

In a possible implementation of the second aspect, the method further includes: That the first electronic device determines, based on a verification result, whether to perform the data transmission with the server includes:
the first electronic device establishes a network secure connection to the server when determining, based on the verification result, that an identity of the server is valid; and
the first electronic device performs the data transmission with the server by using the established network secure connection.

In a possible implementation of the second aspect, the method further includes: The network secure connection is a secure socket layer protocol connection or a transport layer security protocol connection.

In a possible implementation of the second aspect, the method further includes: An operating system of the first electronic device is a lightweight embedded operating system.

According to a third aspect, an embodiment of this application provides a security authentication method, including:
a second electronic device verifies identity information of a server received from a first electronic device, and sends a verification result to the first electronic device.

In a possible implementation of the third aspect, the method further includes: That a second electronic device verifies identity information of a server received from a first electronic device includes:

The second electronic device verifies the identity information of the server based on a root certificate received from the first electronic device.

In a possible implementation of the third aspect, the method further includes: The identity information of the server includes a server certificate issued by a digital certificate authority to the server, and the verification result of the second electronic device for the identity information of the server is obtained in the following manner:

The second electronic device verifies, based on the root certificate received from the first electronic device, the server certificate received from the first electronic device, to obtain the verification result of the second electronic device for the server certificate.

In a possible implementation of the third aspect, the method further includes: The server certificate includes a digital document, a signature generated after the digital certificate authority encrypts a digital digest that is obtained through calculation on the digital document based on a preset digest algorithm, and the preset digest algorithm.

In a possible implementation of the third aspect, the method further includes: That the second electronic device verifies the identity information of the server received from the first electronic device includes: the second electronic device decrypts the signature in the server certificate based on the root certificate received from the first electronic device, to obtain a first digital digest of the signature;
performs hash calculation on the digital document based on the preset digest algorithm to obtain a second digital digest; and
compares the second digital digest with the first digital digest, and determines the verification result of the second electronic device for the server certificate based on a comparison result.

In a possible implementation of the third aspect, the method further includes: An operating system of the second electronic device includes at least one of an Android^{™} operating system, a Harmony^{™} operating system, and an IOS^{™} operating system.

According to a fourth aspect, an embodiment of this application provides a readable medium, and the readable medium stores instructions. When the instructions are executed on an electronic device, the electronic device is enabled to perform the security authentication method according to any one of the first aspect to the third aspect and the various possible implementations of the first aspect to the third aspect.

According to a fifth aspect, an embodiment of this application provides an electronic device, including:
a memory, configured to store instructions executed by one or more processors of the electronic device; and
a processor, where the processor is one of the processors of the electronic device and is configured to perform the security authentication method according to any one of the first aspect to the third aspect and the various possible implementations of the first aspect to the third aspect.

### BRIEF DESCRIPTION OF DRAWINGS

FIG. 1 is a schematic diagram of a network security authentication scenario between a client device and a server according to some embodiments of this application;
FIG. 2 shows a process of establishing a secure connection between a lightweight device and a server by using an SSL protocol;
FIG. 3 is a schematic diagram of a hardware structure of a client device according to some embodiments of this application;
FIG. 4 is a schematic diagram of a software architecture of a client device according to some embodiments of this application;
FIG. 5 shows a process of establishing a secure connection between a smartwatch and a server by using an SSL protocol according to some embodiments of this application;
FIG. 6(a) is a schematic diagram of networking of connecting a smartwatch to a server by using a local area network according to some embodiments of this application;
FIG. 6(b) is a schematic diagram of an ad hoc network of a plurality of devices according to some embodiments of this application;
FIG. 7 is a flowchart of issuing a digital certificate to a server by a digital certificate authority according to some embodiments of this application;
FIG. 8A and FIG. 8B are a flowchart of requesting a video service from a server by a smartwatch according to some embodiments of this application;
FIG. 9 is another flowchart of requesting a video service from a server by a smartwatch according to some embodiments of this application; and
FIG. 10 is a block diagram of a structure of a system according to some embodiments of this application.

### DESCRIPTION OF EMBODIMENTS

Illustrative embodiments of this application include but are not limited to a security authentication method, a readable medium, and an electronic device.

To better understand the technical solutions of this application, some terms in the embodiments of this application are first described.

### (1) Digital certificate

The digital certificate is an electronic certificate that is issued by a digital certificate authority (Certificate Authority, CA) and that is used to identify identity information of a digital certificate holder (for example, a client device), and provides a manner of verifying an identity of a communication peer end. The digital certificate may include public key information allocated by the CA to the digital certificate holder, the identity information of the digital certificate holder, and signature information of the CA.

The CA is an authority responsible for issuing and managing a digital certificate. As a trusted third party in a network, the CA can verify an identity of a digital certificate application device, manage and update the digital certificate, maintain a digital certificate revocation list, and so on.

For example, if a first client device needs to obtain a digital certificate belonging to the first client device, the first client device first applies to the CA. After determining an identity of the first client device, the CA allocates a public key to the first client device. The CA binds the public key to identity information of the first client device, and performs signing. Then, the digital certificate is formed and sent to the first client device (an applicant).

For another example, if a second client device needs to verify authenticity of a first digital certificate of the first client device, the second client device verifies a signature on the first digital certificate by using the public key of the CA. If the verification succeeds, the first digital certificate is considered to be valid.

### (2) Root certificate

The root certificate is a basis for establishing a trust relationship between a CA authentication center and another electronic device, is a digital certificate issued by a CA to itself, and is a start point of a trust chain. To verify authenticity of a certificate (that is, to verify whether a signature of the CA center on this certificate information is valid), a public key of the CA center needs to be used for verification. The public key of the CA center is located in a certificate for signing the certificate, that is, the public key of the CA center is located in the root certificate issued by the CA to itself. Therefore, for verifying authenticity of a certificate by an electronic device, the root certificate needs to be preconfigured in the electronic device.

### (3) SSL (Secure Socket Layer, secure socket layer) protocol

The SSL protocol is a protocol layer located between a reliable connection-oriented network layer protocol and an application layer protocol. An SSL provides secure communication between a client and a server by mutual authentication, using a digital signature to ensure integrity, and using encryption to ensure privacy.

### (4) TLS (Transport Layer Security, transport layer security) protocol

The TLS protocol is used to provide confidentiality and data integrity between two applications.

The following describes the technical solutions of this application in detail with reference to the accompanying drawings.

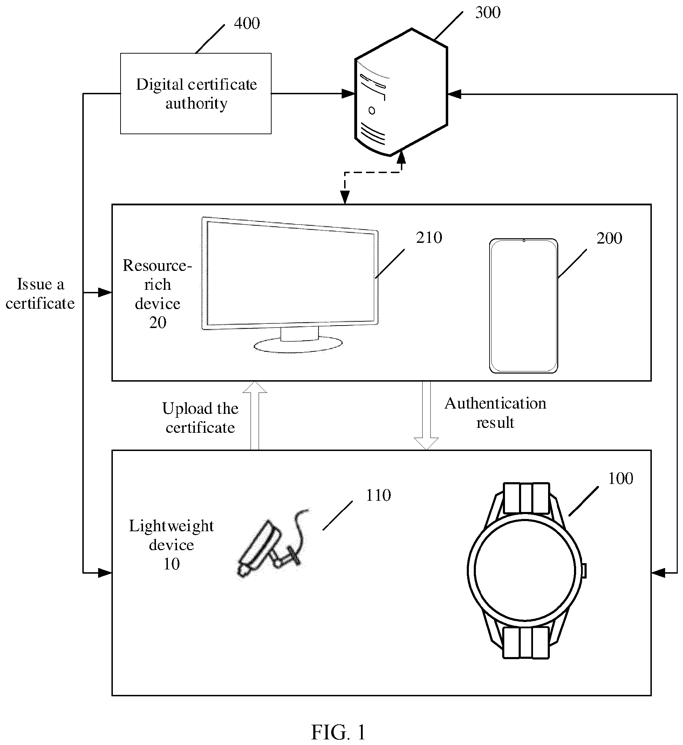

A scenario in which the technical solutions of this application are applicable is first described with reference to FIG. 1. FIG. 1 is a schematic diagram of a security authentication scenario between a client device and a server according to some embodiments of this application. A lightweight device 10, a resource-rich device 20, a server 300, and a digital certificate authority 400 are included.

In some embodiments, memory resources and computing resources of the lightweight device 10 are limited, and a lightweight operating system, for example, a lightweight embedded operating system, may be run, to implement a relatively simple function. For example, a camera 110 shown in FIG. 1 may capture an abnormal picture and upload a surveillance video to a cloud server. For another example, a smartwatch 100 shown in FIG. 1 may measure a heart rate and blood oxygen saturation, display time, and the like for a user.

In some embodiments, the resource-rich device 20 has richer memory resources and computing resources than the lightweight device 10, and can run Android^{™}, Harmony^{™}, and another operating system to implement a relatively complex function. For example, a smart television 210 shown in FIG. 1 may implement AI sound control, video on demand, screen projection, and another function. For another example, in addition to being capable of receiving and making calls and receiving and sending information, a smartphone 200 shown in FIG. 1 may further mount a plurality of applications (application, APP), to provide a plurality of functions such as chatting, shopping, games, audio and video, working, and navigation for the user.

In some embodiments, the lightweight device 10 and the resource-rich device 20 may communicate with the server 300 to request services from the server 300. For example, the lightweight device 10 and the resource-rich device 20 send wireless signals to the server 300 by using wireless communication links, to request the server 300 to process specific business requirements of the lightweight device 10 and the resource-rich device 20, for example, user registration, data obtaining, and monitoring.

In some embodiments, the digital certificate authority 400 can serve as a trusted third party in a local area network or an internet of things in which the lightweight device 10 and the resource-rich device 20 are located, can issue, manage and update digital certificates for the lightweight device 10 and the resource-rich device 20, maintain a digital certificate revocation list, and so on.

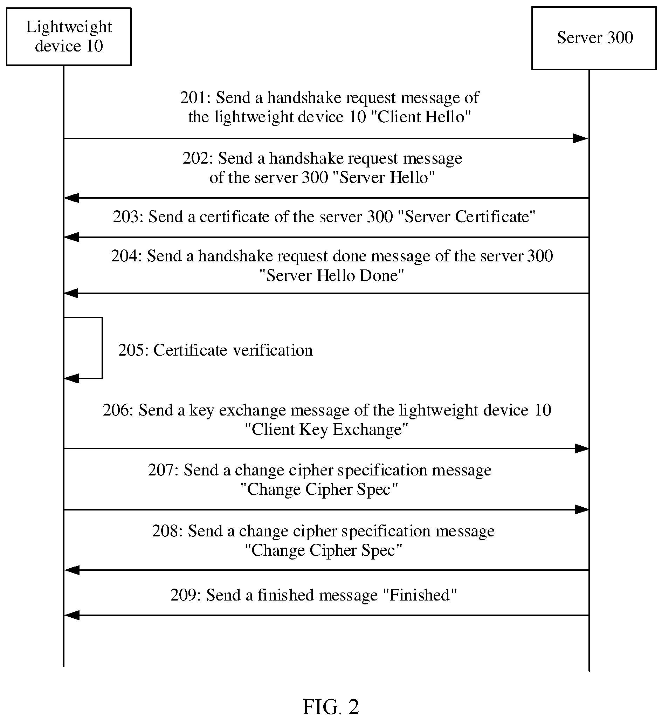

In some embodiments of related technical solutions, to ensure secure transmission of data exchanged between the lightweight device 10 and the server 300, and prevent the data exchanged between the lightweight device 10 and the server 300 from being intercepted or tampered with, a secure and reliable connection needs to be established between the lightweight device 10 and the server 300. For example, data transmitted between the lightweight device 10 and the server 300 is encrypted by using an SSL protocol, to ensure security of the transmitted data. A process of establishing a secure connection between the lightweight device 10 and the server 300 by using the SSL protocol is shown in FIG. 2, and specifically includes the following steps:
Step 201: The lightweight device 10 sends a handshake request message of the lightweight device 10 "Client Hello" to the server 300, where the message carries a cipher suite candidate list, a compression algorithm candidate list, a random number, an extended field, and other information of the lightweight device 10.
Step 202: The server 300 sends a handshake request message of the server 300 "Server Hello" to the lightweight device 10 in response to the received handshake request message of the lightweight device 10 "Client Hello" sent by the lightweight device 10.
Step 203: The server 300 sends a server certificate of the server 300 "Server Certificate" to the lightweight device 10, so that the lightweight device 10 verifies an identity of the server 300.
Step 204: The server 300 sends a handshake request done message of the server 300 "Server Hello Done" to the lightweight device 10, to notify the lightweight device 10 that an authentication preparation at the server 300 side is completed.
Step 205: The lightweight device 10 checks the received certificate of the server 300 to verify whether the identity of the server 300 is valid. For example, whether the certificate of the server 300 is revoked, is within a valid time range, and so on is verified.
Step 206: The lightweight device 10 sends a key exchange message of the lightweight device 10 "Client Key Exchange" to the server 300. To be specific, after identity validity verification of the server 300 succeeds, the lightweight device 10 generates a random number Pre-master through calculating, encrypts the random number by using a public key, and sends an encrypted random number to the server 300.
Step 207: The lightweight device 10 sends a change cipher specification message "Change Cipher Spec" to the server 300, to notify the server 300 that a negotiated communication key and a negotiated encryption algorithm are used in subsequent communication for encrypted communication.
Step 208: The server 300 sends a change cipher specification message "Change Cipher Spec" to the lightweight device 10, to notify the lightweight device 10 that a negotiated key and a negotiated algorithm are used in subsequent communication for encrypted communication.
Step 209: The server 300 sends a finished message "Finished" to the lightweight device 10.

The server 300 calculates a hash value of the received key exchange message "Client Key Exchange" sent by the lightweight device 10, and verifies correctness of data and a secret key sent by the lightweight device 10. If the verification succeeds, a handshake is completed.

It may be understood that after the handshake between the lightweight device 10 and the server 300 is completed, the negotiated key and the negotiated algorithm start to be used for encrypted communication.

In a process of transmitting the data between the lightweight device 10 and the server 300 by using the SSL protocol, the lightweight device 10 needs to verify identity information of the server 300. However, for the lightweight device 10 with relatively low computing power, a process of verifying the identity information of the server 300 uses a large quantity of memory resources and computing resources, and greatly affects performance of the lightweight device 10.

According to the technical solution provided in this embodiment of this application, to reduce a computing burden of the lightweight device 10 and reduce memory usage of the lightweight device 10, when determining that there is the resource-rich device 20 with relatively high computing power and relatively large storage space in a network to which the lightweight device 10 belongs, the lightweight device 10 may send the root certificate issued by the digital certificate authority 400 to the resource-rich device 20, and forward, to the resource-rich device 20 for parsing, a digital certificate (for ease of description, referred to as the "server certificate") that is delivered by the server 300 and that carries the identity information of the server 300, to authenticate validity of the identity of the server 300. Then, the resource-rich device 20 forwards an identity authentication result about the server 300 to the lightweight device 10, so that the lightweight device 10 determines, based on the authentication result, whether to interact with the server 300 in business data.

In comparison with a related technical solution in which the root certificate is preconfigured by the lightweight device 10, and the identity information of the server 300 is directly verified by the lightweight device 10, in the technical solution of this application, when it is determined that another resource-rich device 20 is connected in the same network, the root certificate and other data preconfigured by the lightweight device 10 may be transmitted to the resource-rich device 20. When the lightweight device 10 interacts with the server 300, the server certificate is parsed by the resource-rich device 20. This can reduce resource usage of the lightweight device 10, effectively use the memory resources and the computing resources of the resource-rich device 20, and avoid a waste of resources. In addition, operating power consumption of the lightweight device 10 can be reduced.

In some embodiments, the lightweight device 10 includes but is not limited to the smartwatch 100 and a smart camera 110 shown in FIG. 1, and a sweeping robot, a smart speaker, a smart door lock, a smart rice cooker, a smart alarm clock, a smart socket, and another electronic device with relatively low computing power that are not shown in the figure. In some embodiments, the lightweight device 10 runs a lightweight embedded system.

In some embodiments, the resource-rich device 20 includes but is not limited to the smart television 210 and the smartphone 200 shown in FIG. 1, and a laptop computer, a desktop computer, a tablet computer, a television set with one or more processors embedded in or coupled to, or another electronic device with relatively high computing power that can access a network that is not shown in the figure. In some embodiments, the resource-rich device 20 runs Android^{™}, Harmony^{™}, and another operating system.

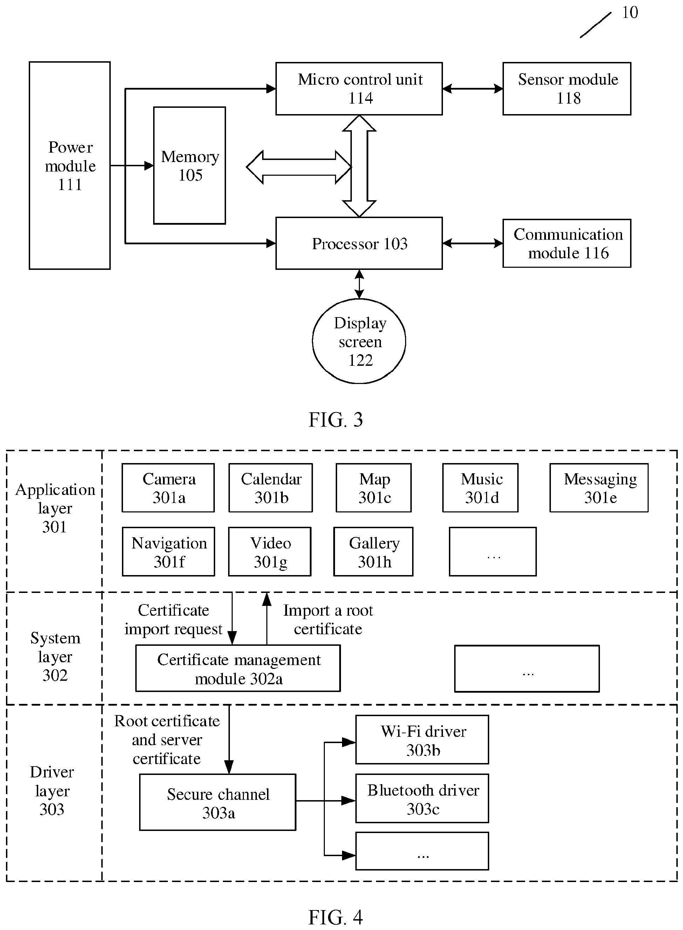

FIG. 3 is a schematic diagram of a hardware structure of a client device according to an embodiment of this application. The client device may be the lightweight device 10, or may be the resource-rich device 20. The following uses the lightweight device 10 as an example to describe the hardware structure of the client device.

A client device 10 can perform the security authentication method provided in this embodiment of this application. In FIG. 3, similar components have a same reference numeral. As shown in FIG. 3, the client device 10 includes a display screen 122, a processor 103, a micro control unit (micro control unit, MCU) 114, a memory 105, a communication module 116, a sensor module 118, a power module 111, and the like.

The display screen 122 may be configured to display information input by the user or prompt information provided for the user, and may display various menus on the client device 10. For example, the display screen 122 may be configured to display a video downloaded from the server 300 by the client device 10. For another example, when the client device 10 is a smart camera, the display screen 122 may be configured to display an abnormal picture captured by the smart camera and a surveillance video stored in the server 300.

The processor 103 includes a plurality of processing units, and may be configured to verify validity of the identity of the server 300 that establishes a reliable connection to the client device 10. For example, the client device 10 determines whether there is access of a resource-rich device in a same network. If there is the access of the resource-rich device, the client device 10 controls, by using the processor 103, the client device 10 to forward, to the resource-rich device, the server certificate delivered by the server 300 for parsing. When no resource-rich device accesses the same network, the client device 10 directly parses, by using the processor 103, the server certificate delivered by the server 300.

The micro control unit 114 is configured to control the sensor module 118, perform an operation on data collected by the sensor module 118, and communicate with the processor 103.

The memory 105 is configured to store a software program and data. The processor 103 executes various functional applications and data processing of the client device 10 by running the software program and the data stored in the memory 105. For example, in some embodiments of this application, the memory 105 may store a root certificate of the client device 10 delivered by the digital certificate authority. In addition, the memory 105 may also store registration information, login information, and the like of the user.

The communication module 116 may be configured to enable the client device 10 to communicate with another electronic device, and connect to a network by using the another electronic device. For example, in some embodiments of this application, the client device 10 may establish a communication connection to the server 300 by using a wireless fidelity (Wireless Fidelity, Wi-Fi) network, Bluetooth (Bluetooth, BT), a near field communication (Near Field Communication, NFC) technology, and the like, and obtain, from the server 300, the server certificate delivered by the server 300. For another example, the client device 10 determines whether there is access of a resource-rich device in a same network. If there is the access of the resource-rich device, the client device 10 sends, to the resource-rich device by using the communication module 116, the root certificate preconfigured by the client device 10 and the server certificate delivered by the server 300; receives a parsing result of the resource-rich device for the server certificate by using the communication module 116; and exchanges business data with the server 300 by using the communication module 116 after determining that the identity of the server 300 is valid.

The power module 111 is configured to supply power to components of the client device 10. In some embodiments, the power module 111 includes a battery.

It may be understood that FIG. 3 shows only an example hardware structure for implementing a function of the client device 10 in the technical solution of this application. The client device 10 that has another structure and can implement a similar function is also applicable to the technical solution of this application. This is not limited herein.

FIG. 4 is a schematic diagram of a software architecture of a client device according to an embodiment of this application. The client device may be the lightweight device 10, or may be the resource-rich device 20. The following uses the lightweight device 10 as an example to describe a software structure of the client device. As shown in FIG. 4, a software architecture of a client device 10 includes an application layer 301, a system layer 302, and a driver layer 303.

As shown in FIG. 4, the application layer 301 may include Camera 301a, Calendar 301b, Map 301c, Music 301d, Messaging 301e, Navigation 301f, Video 301g, Gallery 301h, and another application. For example, when the client device is the smartwatch 100, after receiving tapping an icon of a video APP by the user, the smartwatch 100 enables, in response to a tap operation of the user, the video APP to play a video for the user.

The system layer 302 may include a plurality of functional modules. For example, as shown in FIG. 4, the system layer 302 includes a certificate management module 302a. The certificate management module 302a is configured to: after the application of the client device 10 is enabled, when there is the resource-rich device 20 in a same network to which the client device 10 belongs, import the root certificate preconfigured in the client device 10 into the enabled application in response to a certificate import request sent by the application; and invoke the driver layer 303 to drive the communication module 116 of the client device 10 to send the root certificate preconfigured in the client device 10 and the server certificate delivered by the server 300 to the client device 10 to the resource-rich device 20 in the same network of the client device 10.

In some embodiments, the system layer 302 further includes a functional module not shown in FIG. 4, for example, a surface manager (surface manager), a media library (Media Libraries), and a three-dimensional graphics processing library (for example, an OpenGL ES). The surface manager is configured to manage a display function of the client device 10, and provide two-dimensional and three-dimensional layer fusion for a plurality of applications of the client device 10. The media library supports playback and recording in a plurality of commonly used audio and video formats, static image files, and the like. The three-dimensional graphics processing library is configured to implement three-dimensional graphics drawing, image rendering, compositing, layer processing, and the like.

The driver layer 303 includes a secure channel 303a, a Wi-Fi driver 303b, a Bluetooth driver 303c, and the like. The Wi-Fi driver 303b and the Bluetooth driver 303c are respectively configured to drive a Wi-Fi module and a Bluetooth module in the communication module 116 of the client device 10, to enable communication functions of the Wi-Fi module and the Bluetooth module. The secure channel 303a is configured to encrypt data of communication between the client device 10 and another electronic device, to ensure security of data transmission for the communication between the client device 10 and the another electronic device.

In some embodiments, the driver layer 303 further includes a display driver, a camera driver, an audio driver, a sensor driver, and the like that are not shown in FIG. 4.

It may be understood that FIG. 4 shows only an example software architecture for implementing a function of the client device 10 in the technical solution of this application. The client device 10 that has another structure and can implement a similar function is also applicable to the technical solution of this application. This is not limited herein.

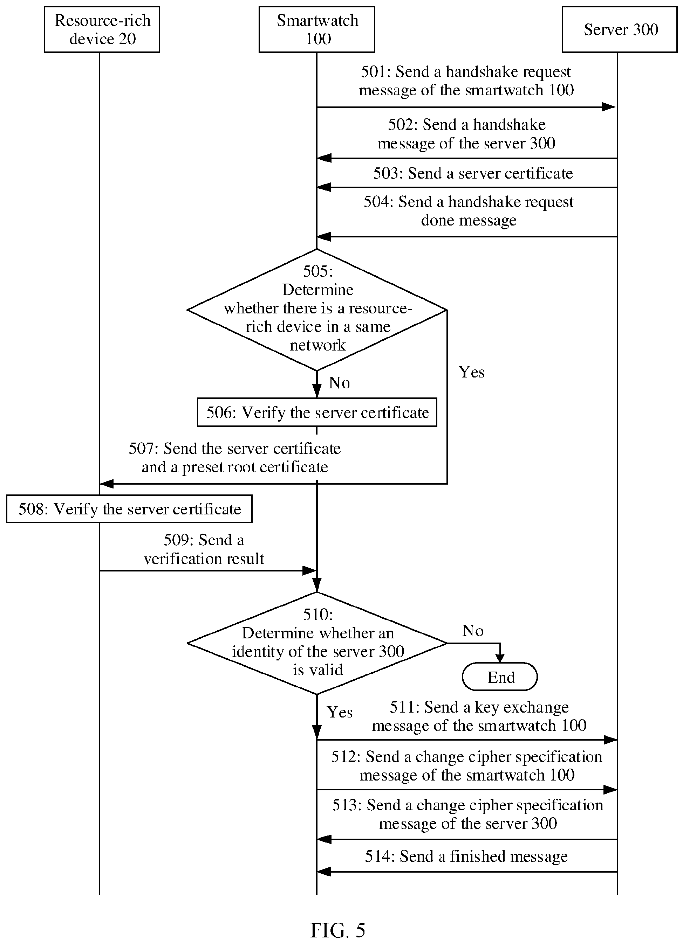

The following describes a security authentication method provided in an embodiment of this application, with reference to FIG. 5 to FIG. 7, by using an example in which a secure connection is established between the smartwatch 100 and the server 300 shown in FIG. 1 by using an SSL protocol.

It may be understood that, to implement secure communication between the smartwatch 100 and the server 300, another communication protocol may also be used for communication between the smartwatch 100 and the server 300, for example, a TLS protocol. This is not limited in this application.

As described above, in a process of establishing the secure connection between the smartwatch 100 and the server 300 by using the SSL protocol, the smartwatch 100 may parse a server certificate by using the resource-rich device 20 to verify validity of an identity of the server 300. In this way, memory resources and computing resources that are used by the smartwatch 100 to parse the server certificate may be released, so that performance of the smartwatch 100 is not affected, and power consumption of the smartwatch 100 can be reduced.

Specifically, as shown in FIG. 5, the process of establishing the secure connection between the smartwatch 100 and the server 300 by using the SSL protocol includes the following steps.

Step 501: The smartwatch 100 sends a handshake request message of the smartwatch 100 to the server 300. In some embodiments, the message carries a cipher suite candidate list, a compression algorithm candidate list, a random number, an extended field, and other information of the smartwatch 100.

For example, in some embodiments, the handshake request message (referred to as a handshake message) of the smartwatch 100 sent to the server 300 by the smartwatch 100 includes the following fields as shown in Table 1:

**Table 1**

| Field name | Value or field length |
|---|---|
| Handshake Type | Ox01 |
| Length | 3 bytes |
| Version | 2 bytes |
| Random | 32 bytes |
| Session ID | 1 byte |
| Cipher Suites | 2 bytes |
| Compression methods | 2 bytes |
| Extension | 117 bytes |
| hostname | 54 bytes |
| signature_algorithms | 26 bytes |
| supported_elliptic_curves | 12 bytes |
| supported_point_formats | 6 bytes |
| max_fragment_length | 5 bytes |
| encrypt_then_mac | 4 bytes |
| extended_ms | 4 bytes |
| session_ticket | 4 bytes |

The fields in Table 1 are described as follows:
Handshake Type: is a handshake type, and Ox01 indicates Client Hello, that is, the smartwatch 100 sends a handshake message to the server 300.

Length: is a length of a handshake message.

Version: means a version number of a highest version of the SSL protocol supported by the smartwatch 100.

Random: means a random number sequence, including a timestamp in a 4-byte UNIX format and a 28-byte secure random number, with a total length of 32 bytes.

Session ID: In a subsequent connection process, this field saves a unique identifier of a session, and the server 300 may find a corresponding session status in a cache by using the field. After the smartwatch 100 and the server 300 close a session, if the smartwatch 100 needs to reinitiate the session, the field may be used by both parties to negotiate whether to perform a re-handshake process.

Cipher Suites: are cipher suites supported by the smartwatch 100 side. Because the smartwatch 100 side and the server 300 side have different support degrees for some encryption and decryption algorithms. However, during an SSL protocol transmission process, the smartwatch 100 side and the server 300 side need to use same encryption and decryption algorithms. The smartwatch 100 first needs to notify the server 300 of which cipher suites are supported by the smartwatch 100, and the smartwatch 100 sends a supported cipher suite list to the server 300.

For example, in some embodiments, the cipher suite supported by the smartwatch 100 includes but is not limited to one or more of the following cipher suites:
MBEDTLS_{_}TLS_ECDHE_ECDSA WITH_AES_256_GCM_SHA384;
MBEDTLS_TLS_ECDHE_RSA_WITH_AES_256_GCM_SHA384;
MBEDTLS_TLS_ECDHE_ECDSA_WITH_AES_256_CCM;
MBEDTLS_TLS_ECDHE_ECDSA_WITH_AES_256 CBC SHA384;
MBEDTLS_TLS_ECDHE_RSA_WITH_AES_256 CBC_SHA384;
MBEDTLS_TLS_ECDHE_ECDSA_WITH_AES_256_CBC_SHA;
MBEDTLS_TLS_ECDHE_RSA_WITH _AES_256_CBC_SHA; and
MBEDTLS_TLS_PSK_WITH_AES_128_CCM _8.

Compression methods: are compression methods, indicating compression manners supported by the smartwatch 100.

Extension: means an extended option. In the SSL protocol, the extended option appears at an end of the Client Hello message in a form of an extended block. The extended block includes a plurality of extended items, and each extended item includes a 2-byte extended identifier and corresponding data.

In the embodiment shown in Table 1, the following extended items are included:
hostname: means a name of an object to be accessed by the smartwatch 100.
signature_algorithms: The smartwatch 100 notifies the server 300 of a signature algorithm and a unidirectional hash function that are supported by the smartwatch 100.
supported_elliptic_curves: The smartwatch 100 notifies the server 300 of an elliptic curve list supported by the smartwatch 100.
supported_point_formats: The smartwatch 100 notifies the server 300 of an elliptic curve coordinate point type supported by the smartwatch 100.
max_fragment_length: means a maximum fragment length supported by the smartwatch 100.
encrypt_then_mac: An "authentication+encryption" algorithm adopts a method of first MAC and then encryption.
extended_ms: mean key calculation manners.
session_ticket: The smartwatch 100 supports stateless session recovery.

It may be understood that Table 1 shows only an example of the handshake request message sent by the smartwatch 100 to the server 300. This application is not limited thereto.

Step 502: The server 300 sends a handshake message of the server 300 to the smartwatch 100 in response to the received handshake request information sent by the smartwatch 100. In some embodiments, the handshake message of the server 300 carries a cipher suite candidate list, a compression algorithm candidate list, a random number, an extended field, and other information of the server 300.

For example, in some embodiments, the handshake message of the server 300 sent by the server 300 to the smartwatch 100 includes the following fields as shown in Table 2:

**Table 2**

| Field name | Value or field length |
|---|---|
| Handshake Type | Ox02 |
| Length | 3 bytes |
| Version | 2 bytes |
| Random | 32 bytes |
| Session ID | 1 byte |
| Ciphersuite | 2 bytes |
| Extension | 2 bytes |

The fields in Table 2 are described as follows:
Handshake Type: is a handshake type, and 0x2 indicates ServerHello, that is, the server 300 sends a handshake message to the smartwatch 100.

Length: is a length of a handshake message.

Version: means a version number of a highest version of the SSL protocol supported by the server 300.

Random: means a random number sequence, also including a timestamp in a 4-byte UNIX format and a 28-byte secure random number, with a total length of 32 bytes.

Session ID: is a session ID.

Ciphersuite: is a cipher suite selected by the server 300 after negotiation.

Extension: means an extended option of the server 300.

It may be understood that Table 2 shows only an example of the handshake message of the server 300 sent by the server 300 to the smartwatch 100. This application is not limited thereto.

Step 503: The server 300 sends a server certificate to the smartwatch 100. In some embodiments, the server certificate is a digital certificate issued by the digital certificate authority 400 in FIG. 1 to the server 300, including public key information of the server 300, identity information of the server 300, signature information of the digital certificate authority 400, and the like. A specific process in which the digital certificate authority 400 delivers the digital certificate to the server 300 is described in detail in the following.

For example, in some embodiments, the server certificate sent by the server 300 to the smartwatch 100 includes the following fields as shown in Table 3:

**Table 3**

| Field name | Value or field length |
|---|---|
| Handshake Type | Ox0b |
| Length | 3 bytes |
| Certificates Length | 3 bytes |
| Certificates | 3 bytes |

The fields in Table 3 are described as follows:
Handshake Type: is a handshake type, and Ox0b indicates Certificate, indicating the server certificate.

Length: is a length of a handshake message.

Certificates Length: is a total length of the server certificate.

Certificates: mean content of the server certificate.

Some server certificates include the following content:

Certificate Length: is a total length of the server certificate.

Version: is a version of the server certificate.

SerialNumber: is a serial number that is of the server certificate and that is allocated by a certificate issuer (for example, the digital certificate authority 400).

Signature: means a certificate signature algorithm, including an algorithm used by the certificate issuer to sign a certificate.

Issuer: means an issuer identifier, identifying an entity that signs and issues the certificate.

Validity: means a period of validity, including an effective date and an end date of the server certificate.

Subject: means a certificate body name of the server, used to identify an entity that obtains the certificate.

Subject Public Key Info: means a public key, used to indicate user public key information.

Extensions: mean one or more extension fields.

Algorithm Identifier: identifies an algorithm, a parameter, and data used by the certificate issuer to sign the certificate. Specific fields are as follows:

Algorithm Id: is the same as Signature, and means a certificate signature algorithm.

Padding: means a padding manner of padding data before signing.

Encrypted: means performing hash calculation on certificate information, and then using a private key to digitally sign hash to obtain this field.

It may be understood that Table 3 shows only an example of the server certificate sent by the server 300 to the smartwatch 100. This application is not limited thereto.

Step 504: The server 300 sends a handshake request done message to the smartwatch 100. The message is used to notify the smartwatch 100 that an authentication preparation at the server 300 side is completed.

After sending all handshake information to the smartwatch 100, the server 300 sends the handshake request done message to indicate that the handshake messages of the server 300 are sent.

For example, in some embodiments, the handshake request done message of the smartwatch 100 sent by the server 300 to the smartwatch 100 includes the following fields as shown in Table 4:

**Table 4**

| Field name | Value or field length |
|---|---|
| Handshake Type | Ox0e |
| Length | 3 bytes |

The fields in Table 4 are described as follows:
Handshake Type: is a handshake type, and 0x0e indicates ServerHelloDone, indicating that a handshake request of the server 300 is completed.

Length: is a length of a handshake message.

It may be understood that Table 4 shows only an example of the handshake request done message sent by the server 300 to the smartwatch 100. This application is not limited thereto.

Step 505: The smartwatch 100 determines whether there is a resource-rich device 20 in a same network. If yes, it indicates that there is the resource-rich device 20 in the same network of the smartwatch 100, and step 507 is performed; otherwise, it indicates that there is no resource-rich device 20 in the same network of the smartwatch 100, and step 506 is performed.

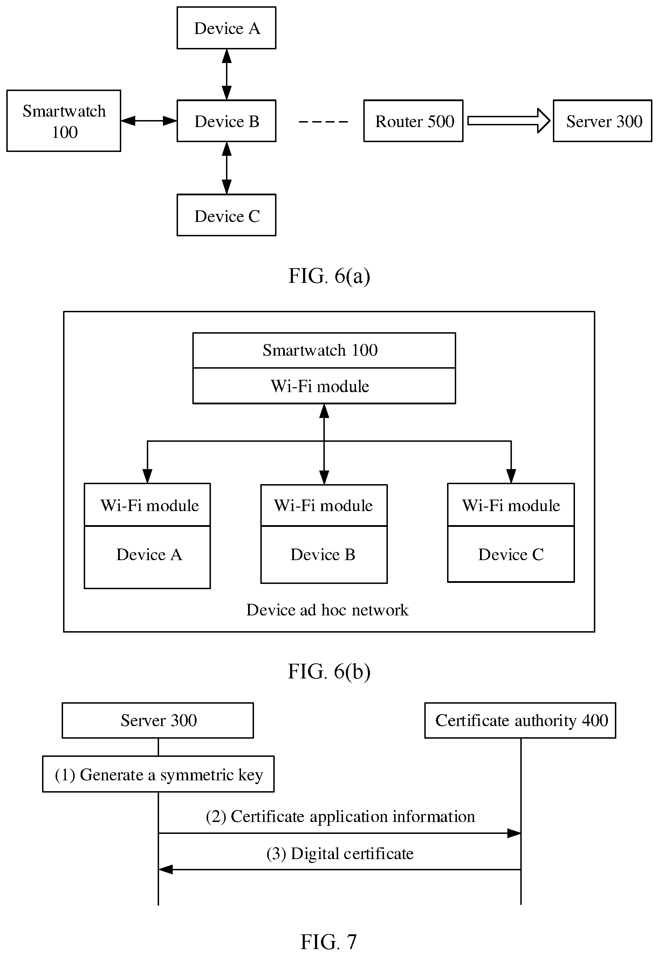

For example, in an embodiment shown in FIG. 6(a), the smartwatch 100, a device A, a device B, and a device C are located in a same local area network, and the smartwatch 100, the device A, the device B, and the device C are connected to the server 300 by using a router 500. For another example, the smartwatch 100, the device A, the device B, and the device C are located in a same internet of things. In some other embodiments, the smartwatch 100, the device A, the device B, and the device C may further form a distributed device ad hoc network shown in FIG. 6(b). For example, in some embodiments, the smartwatch 100, the device A, the device B, and the device C establish a distributed device ad hoc network based on Wi-Fi. One of the smartwatch 100, the device A, the device B, and the device C are connected to a Wi-Fi router, and the other devices are connected, by using respective Wi-Fi modules, to the device connected to the Wi-Fi router.

In some embodiments, when any one of the smartwatch 100, the device A, the device B, and the device C in the same network is enabled, a message added with fields that represent current device information, resource usage information, available computing power information, and the like of each device in the network may be broadcast to the other electronic devices in the network. The other electronic devices may parse the received broadcast information, extract the fields that represent the device information, the resource usage information, the available computing power information, and the like, and determine, based on content of the fields of the resource usage information, the available computing power information, and the like, whether a corresponding electronic device is a resource-rich device.

In some embodiments, capability levels of the electronic devices in the same network may be classified. For example, it is assumed that the smartwatch 100, the device A, the device B, and the device C form a virtual hyper terminal system. A distributed operating system is installed on at least one electronic device in the virtual hyper terminal. The distributed operating system has a certificate management module; can rank various capabilities of the electronic devices according to a unified capability classification standard; and can select, when an electronic device needs to verify the server certificate, an electronic device with a best capability from the electronic devices as a resource-rich device that actually performs a server certificate verification operation.

It may be understood that the selected resource-rich device that actually performs the server certificate verification operation and the electronic device that originally needs to verify the server certificate are mutually trusted devices. For example, in some embodiments, unified authorization and authentication of a user is performed on the electronic devices of the virtual hyper terminal system, so that the electronic devices are mutually trusted devices. For example, the electronic devices may complete the unified authorization and authentication by performing PIN code authentication, face recognition authentication, fingerprint authentication, voiceprint authentication, and the like by the user. This is not limited herein.

In addition, the unified capability classification standard used by the distributed operating system may include but is not limited to computing power levels from 0 to 18, denoted as PO-P18; storage capability levels from 0 to 12, denoted as S0-S12; and security capability levels from 0 to 8, denoted as T0-T8. A capability level of each electronic device may be only based on a computing power level of the electronic device. Alternatively, the capability level of the electronic device may be comprehensively classified based on computing power, storage capability, security capability, and another capability of the electronic device. A device with a higher capability level is finally determined as a resource-rich device.

In some embodiments, the computing power of the electronic device includes at least one of computing power of a central processing unit, computing power of a graphics processing unit, and computing power of an image signal processor.

For example, in some embodiments, the electronic device includes a central processing unit (Central Processing Unit, CPU), a graphics processing unit (graphics processing unit, GPU), and an image signal processor (image signal processor, ISP). In this case, the computing power of the electronic device is a sum of computing power of the CPU, computing power of the GPU, and computing power of the ISP, or a capability obtained after comprehensive evaluation is performed according to the computing power of the CPU, the computing power of the GPU, and the computing power of the ISP.

For example, in the hyper terminal system including the smartwatch 100, the device A, the device B, and the device C, a capability level of the smartwatch 100 is L0, a capability level of the device A is L1, a capability level of the device B is L2, and a capability level of the device C is L3. The smartwatch 100 whose capability level is L0 has a lowest capability, and the device C whose capability level is L3 has a highest capability. In this case, the certificate management module in the distributed operating system may determine the device A, the device B, and the device C as resource-rich devices of the smartwatch 100, and may select the device C with the highest capability as the resource-rich device that actually performs the server certificate verification operation. In addition, the smartwatch 100 and the device C complete authorization and authentication of a same user and are mutually trusted devices. Therefore, the device C can verify the server certificate sent by the smartwatch 100. It may be understood that the foregoing merely illustratively describes a selection rule when there are a plurality of resource-rich devices in the same network. In actual application, another capability of the electronic device may be further considered comprehensively to classify the capability level of the electronic device. For example, the capability level of the electronic device may be classified with reference to current power of the electronic device, the computing power, the storage capability, and the security capability. This application sets no limitation thereto.

Step 506: The smartwatch 100 verifies the server certificate. Then, step 510 is performed.

In some embodiments, the server certificate is a digital certificate issued by the digital certificate authority 400. For example, the server 300 sends certificate application information to the digital certificate authority 400. The digital certificate authority 400 creates a digital document based on the certificate application information sent by the server 300. The digital document may include a public key and an identity of the server 300, a valid date of the digital document, a name of the digital certificate authority 400, and the like. The digital certificate authority 400 uses a digest algorithm to calculate the digital document created above to obtain a digital digest. Then, the digital certificate authority 400 invokes a signature private key of a root certificate to encrypt the digital digest of the server 300 to generate a signature. The signature, the digital document, and the used digest algorithm are included in the server certificate.

The smartwatch 100 verifies the server certificate, that is, verifies that the server certificate is issued by the digital certificate authority 400 and can be trusted. In some embodiments, after receiving the server certificate, the smartwatch 100 decrypts the signature in the server certificate by using the public key of the digital certificate authority 400, that is, invoking the public key of the root certificate, to obtain the digital digest in the signature, then performs hash calculation on the digital document by using the digest algorithm included in the digital server certificate, to obtain a new digital digest, and compares the new digital digest with the digest in the signature. If the new digital digest is consistent with the digest in the signature, it indicates that the server certificate is not tampered with, and the server certificate is a valid certificate delivered by the digital certificate authority 400 and is trusted, that is, the identity of the server is valid.

Step 507: The smartwatch 100 sends the preconfigured root certificate and the received server certificate to the resource-rich device 20.

For example, in some embodiments, the smartwatch 100 sends the root certificate preconfigured by the smartwatch 100 and the received server certificate to the resource-rich device 20 through Wi-Fi or Bluetooth, or in another manner.

In some embodiments, after determining that there is the resource-rich device 20 in the same network, the smartwatch 100 may directly send the root certificate preconfigured by the smartwatch 100 to the resource-rich device 20, and then send the server certificate delivered by the server 300 to the resource-rich device 20 after the smartwatch 100 initiates an SSL connection to the server 300. In this way, usage of memory resources and operation resources of the smartwatch 100 due to a requirement for preconfiguring the root certificate and verification of the server certificate can be avoided. Security of communication between the smartwatch 100 and the server 300 can be ensured, performance of the smartwatch 100 can also be ensured, and power consumption of the smartwatch 100 can be reduced.

It should be noted that the smartwatch 100 may further send the preconfigured root certificate to the resource-rich device 20 before initiating an SSL handshake request message to the resource-rich device 20. Alternatively, after initiating the SSL handshake request message to the resource-rich device 20, the smartwatch 100 may further send the preconfigured root certificate to the resource-rich device 20 before the smartwatch 100 sends the server certificate to the resource-rich device 20. A specific step in which the smartwatch 100 sends the preconfigured root certificate to the resource-rich device 20 is not limited in this application, provided that the smartwatch 100 sends the preconfigured root certificate to the resource-rich device 20 before sending the server certificate to the resource-rich device 20.

Step 508: The resource-rich device 20 verifies the server certificate. For example, the resource-rich device 20 parses the server certificate by using a method similar to step 506, to verify validity of the identity of the server 300. Details are not described herein again.

Step 509: The resource-rich device 20 sends a verification result of the server certificate to the smartwatch 100.

Step 510: The smartwatch 100 determines, based on the verification result of the server certificate, whether the identity of the server 300 is valid.

For example, in some embodiments, if the smartwatch 100 determines that the identity of the server 300 is valid, the smartwatch 100 starts to use a negotiated key and algorithm for encrypted communication after establishing an SSL connection to the server 300, to request a business service from the server 300. In some embodiments, if the smartwatch 100 determines that the identity of the server 300 is invalid, the smartwatch 100 terminates establishing a connection to the server 300.

Step 511: The smartwatch 100 sends a key exchange message of the smartwatch 100 to the server 300. To be specific, after identity validity verification of the server 300 succeeds, the smartwatch 100 generates a random number Pre-master through calculating, encrypts the random number by using the public key, and sends an encrypted random number to the server 300.

Step 512: The smartwatch 100 sends a change cipher specification message to the server 300. In this case, the server 300 is notified that a negotiated communication key and an encryption algorithm are used in subsequent communication for encrypted communication.

Step 513: The server 300 sends a change cipher specification message to the smartwatch 100. In this case, the smartwatch 100 is notified that the negotiated communication key and the encryption algorithm are used in subsequent communication for encrypted communication.

Step 514: The server 300 sends a finished message to the smartwatch 100.

The server 300 calculates a hash value of the received key exchange message sent by the smartwatch 100, and verifies correctness of data and a secret key sent by the smartwatch 100. If the verification succeeds, a handshake is completed. In this case, the smartwatch 100 starts to use the negotiated key and algorithm for encrypted communication after establishing the SSL connection to the server 300, to request the business service from the server 300.

In some embodiments, the server certificate is the digital certificate issued by the digital certificate authority 400 shown in FIG. 1. Specifically, for example, a process in which the digital certificate authority 400 delivers the digital certificate to the server 300 may include steps shown in FIG. 7.
(1) The server 300 generates a symmetric key, and the symmetric key includes a pair of public key and private key.

In some embodiments, the server 300 may generate the pair of public key and private key by using an asymmetric encryption algorithm. The private key is kept by the server 300 and the public key may be broadcast to a plurality of client devices communicating with the server 300.

In some embodiments, the symmetric key of the server 300 may alternatively be generated by the digital certificate authority 400. This is not limited in this application.

(2) The server 300 sends a certificate application information to the digital certificate authority 400, to apply for a digital certificate from the digital certificate authority 400.

In some embodiments, the certificate application information includes the public key, an identity, and other information of the server 300.

(3) The digital certificate authority 400 issues the generated digital certificate of the server 300 to the server 300.

In some embodiments, the digital certificate authority 400 creates a digital document based on the certificate application information sent by the server 300. The digital document may include the public key and the identity of the server 300, a valid date of the digital document, a name of the digital certificate authority 400, and the like.

Then, the digital certificate authority 400 uses a digest algorithm to calculate the digital document created above to obtain a digital digest. To facilitate proving that the digital certificate of the server 300 is issued by the digital certificate authority 400, the digital certificate authority 400 needs to encrypt, by using a private key of the digital certificate authority 400, the calculated digital digest of the server 300 to generate a signature. The signature, the digital document, and the used digest algorithm are included in the server certificate. Finally, the digital certificate authority 400 issues the generated digital certificate of the server 300 to the server 300.

After receiving the digital certificate issued by the digital certificate authority 400, the server 300 may perform identity authentication by using the digital certificate in a communication process, to provide secure and reliable communication for both communication parties.

It may be understood that the server 300 has the private key that is only known to the server 300, to decrypt and sign received data. The server 300 also has the public key that can be disclosed to another electronic device, to perform encryption and signature verification on sent data. When the server 300 sends data, the server 300 encrypts the data by using the public key. A receive-end device decrypts the received data by using a private key allocated to the device by the digital certificate authority 400. Therefore, data transmitted between the server 300 and the client device can be transferred securely and without error. Even if the data is intercepted by a third party, decryption cannot be performed without a corresponding private key, thereby ensuring data transmission security.

The foregoing generally describes the security authentication method provided in this embodiment of this application by using an example in which the secure connection is established between the smartwatch 100 and the server 300 by using the SSL protocol.

To better understand the technical solutions of this application, the following describes in detail the security authentication method provided in this application, with reference to the hardware structure diagram shown in FIG. 3 and the software architecture diagram shown in FIG. 4, by using an example in which a secure connection is established between the smartwatch 100 and the server 300 by using an SSL protocol, the smartwatch 100 requests a video service from the server 300, there is the resource-rich device 20 in a same network in which the smartwatch 100 is located, and the resource-rich device 20 verifies a server certificate. It may be understood that the smartwatch 100 may further request game downloading, navigation, instant messaging, and another type of service from the server 300.

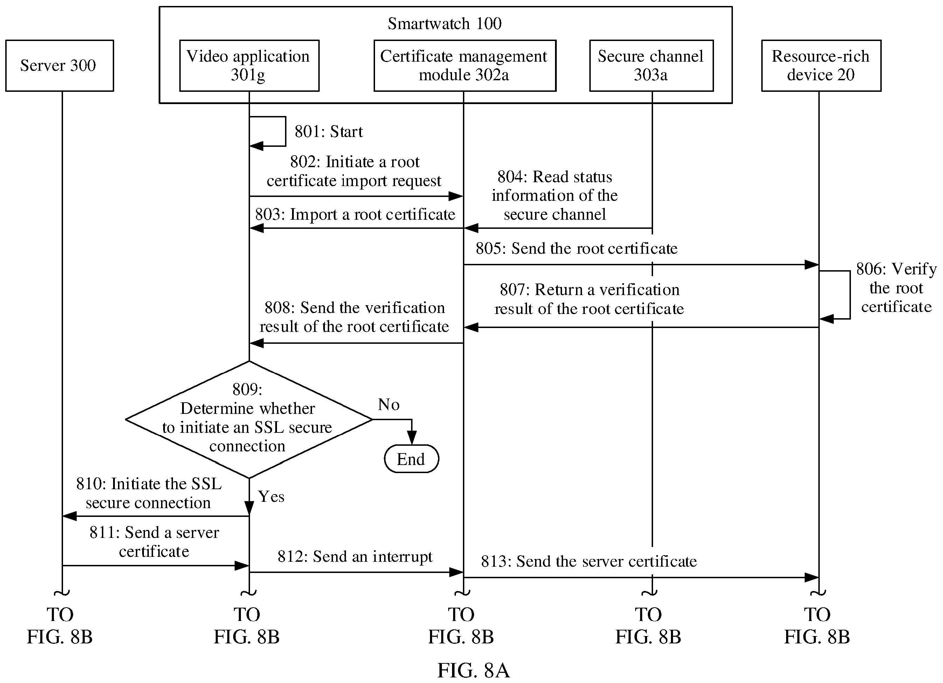

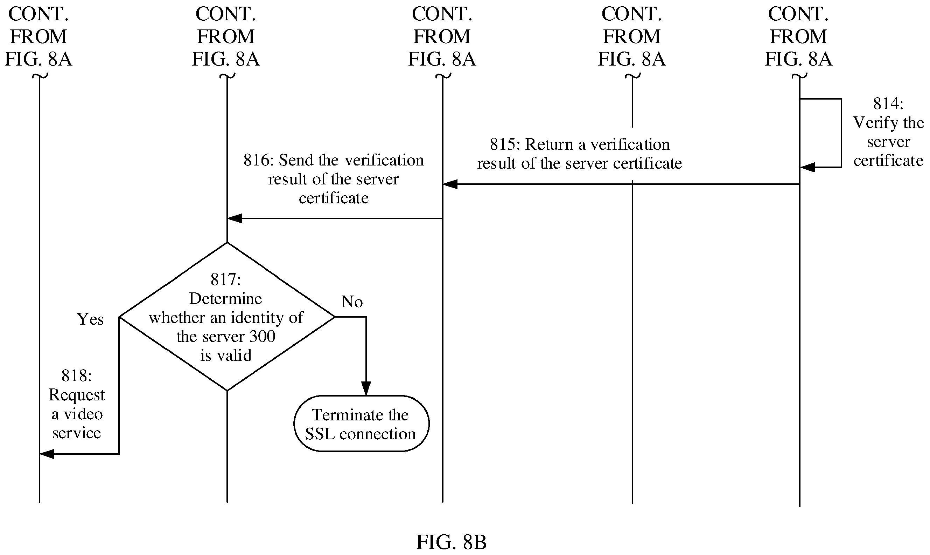

Specifically, as shown in FIG. 8A and FIG. 8B, a process of requesting the video service from the server 300 by the smartwatch 100 includes the following steps.

Step 801: The smartwatch 100 enables a video application 301g after detecting a user operation.

For example, in some embodiments, a user taps an icon corresponding to the video application 301g on a desktop of the smartwatch 100. After detecting that the icon of the video application 301g is tapped, the smartwatch 100 enables the video application 301g.

Step 802: The video application 301g of the smartwatch 100 initiates a root certificate import request to a certificate management module 302a of the smartwatch 100. In this case, the certificate management module 302a is requested to import a root certificate preconfigured in storage space of the smartwatch 100 into the enabled video application 301g, so that the video application 301g uses the root certificate to verify the server certificate delivered by the server 300 when requesting a service from the server 300. After receiving the root certificate import request, the certificate management module 302a of the smartwatch 100 simultaneously performs step 803 and step 804.

In this way, for different applications, the smartwatch 100 only needs to preconfigure one root certificate. When each application requests a service from the server 300, only the preconfigured root certificate needs to be imported into each application, to verify the server certificate based on the imported root certificate. The smartwatch 100 does not need to preconfigure a root certificate for each application, so that the smartwatch 100 can implement normalized management of the root certificate and memory usage of the smartwatch 100 can be reduced.

Step 803: The certificate management module 302a of the smartwatch 100 imports the root certificate preconfigured in the storage space of the smartwatch 100 into the enabled video application 301g.

Step 804: The certificate management module 302a of the smartwatch 100 reads status information of a secure channel 303a, determines whether the secure channel 303a is available, and prepares for sending or receiving data. The secure channel 303a is configured to encrypt data communicated between the smartwatch 100 and another electronic device, to enable secure communication between the smartwatch 100 and the another electronic device.

Step 805: The certificate management module 302a of the smartwatch 100 sends the root certificate of the smartwatch 100 to the resource-rich device 20 by using the secure channel 303a of the smartwatch 100. To be specific, in a case in which there is the resource-rich device 20 in the same network of the smartwatch 100, to reduce memory of the smartwatch 100 used by the preconfigured root certificate, the preconfigured root certificate may be sent to the resource-rich device 20.

Step 806: The resource-rich device 20 verifies the root certificate received from the smartwatch 100.

For example, in some embodiments, for the received root certificate, the resource-rich device 20 may verify the root certificate by using a method similar to step 506 in FIG. 5, to verify whether the root certificate is valid. For details, refer to the foregoing text description about step 506 in FIG. 5. Details are not described herein again.

Step 807: The resource-rich device 20 sends a verification result of the root certificate to the certificate management module 302a of the smartwatch 100 by using the secure channel 303 of the smartwatch 100.

Step 808: The certificate management module 302a of the smartwatch 100 sends the received verification result of the root certificate to the video application 301g of the smartwatch 100.

Step 809: The video application 301g of the smartwatch 100 determines, based on the received verification result of the root certificate, whether to initiate an SSL secure connection to the server 300. If yes, it indicates that the root certificate is valid, the video application 301g of the smartwatch 100 initiates the SSL secure connection to the server 300, and step 810 is performed; otherwise, it indicates that the root certificate is invalid. In this case, the video application 301g of the smartwatch 100 does not initiate the SSL secure connection to the server 300, and a procedure ends.

Step 810: The video application 301g of the smartwatch 100 initiates the SSL secure connection to the server 300. In this case, when there is the resource-rich device 20 in the same network of the smartwatch 100, an SSL session between the video application 301g of the smartwatch 100 and the server 300 is enabled.

For example, in some embodiments, the video application 301g of the smartwatch 100 sends a handshake request message to the server 300, which includes a cipher suite, a data compression method, a random number, an extended field, and other information that are supported by the smartwatch 100, to notify the server 300 to enable the SSL session.

The server 300 responds to the handshake request message of the smartwatch 100, and sends a handshake request message of the server 300 to the smartwatch 100. The message includes a cipher suite, a data compression method, a session ID, a random number, an extended field, and other information that are supported by the server 300.

Step 811: The server 300 sends the server certificate to the video application 301g of the smartwatch 100. To be specific, when there is the resource-rich device 20 in the same network of the smartwatch 100, the server 300 responds to the SSL session of the smartwatch 100, and delivers the server certificate to the smartwatch 100.

For example, in some embodiments, when there is the resource-rich device 20 in the same network of the smartwatch 100, the server 300 sends the server certificate to the video application 301g of the smartwatch 100, and sends a handshake request done message, to notify the smartwatch 100 that an authentication preparation at the server 300 side is completed and a response from the smartwatch 100 is awaited.

Step 812: The video application 301g of the smartwatch 100 sends an interrupt to the certificate management module 302a of the smartwatch 100, to request the certificate management module 302a to read the server certificate.

Step 813: The certificate management module 302a of the smartwatch 100 sends the server certificate to the resource-rich device 20 by using the secure channel 303a of the smartwatch 100. To be specific, when there is the resource-rich device 20 in the same network of the smartwatch 100, after the certificate management module 302a of the smartwatch 100 reads the server certificate from the video application 301g, to securely transfer the read server certificate to the resource-rich device 20, the certificate management module 302a of the smartwatch 100 may send, by invoking the secure channel 303a of the smartwatch 100, the server certificate to the resource-rich device 20 by using the secure channel.

In some embodiments, the certificate management module 302a of the smartwatch 100 may register a callback function corresponding to the video application 301g. After receiving the server certificate, the certificate management module 302a of the smartwatch 100 may trigger the smartwatch 100 to call the callback function to send the server certificate to the resource-rich device 20.

Then, the server certificate is invoked into the secure channel 303a by using the callback function, and the server certificate is sent to the resource-rich device 20.

Step 814: The resource-rich device 20 verifies the received server certificate. To be specific, when there is the resource-rich device 20 in the same network of the smartwatch 100, a process of verifying the server certificate by the smartwatch 100 is executed by the resource-rich device 20. Therefore, computing resources of the smartwatch 100 for verifying the server certificate can be released, performance of the smartwatch 100 can be ensured, and power consumption of the smartwatch 100 can be reduced.

For example, in some embodiments, for the received server certificate, the resource-rich device 20 may verify the server certificate by using a method similar to step 506 in FIG. 5, to verify whether an identity of the server 300 is valid. For details, refer to the foregoing text description about step 506 in FIG. 5. Details are not described herein again.

In some embodiments, the server certificate sent by the server 300 to the video application 301g of the smartwatch 100 is delivered in a form of a certificate chain, and a lowest-level certificate is a secondary certificate issued by the root certificate of the server 300. To verify the certificate chain delivered by the server 300, the resource-rich device 20 verifies, based on the root certificate received from the smartwatch 100, the server certificate in the form of the certificate chain obtained from the smartwatch 100.

Step 815: The resource-rich device 20 sends a verification result of the server certificate to the certificate management module 302a of the smartwatch 100 by using the secure channel 303a of the smartwatch 100.

Step 816: The certificate management module 302a of the smartwatch 100 sends the received verification result of the server certificate to the video application 301g of the smartwatch 100.

For example, in some embodiments, after receiving the verification result of the server certificate, the certificate management module 302a of the smartwatch 100 sends an interrupt message to the video application 301g of the smartwatch 100. After receiving the interrupt message sent by the certificate management module 302a, the video application 301g of the smartwatch 100 reads the verification result of the server certificate from the certificate management module 302a.

In some embodiments, the smartwatch 100 cannot directly perceive the verification result of the server certificate by the resource-rich device 20. Therefore, a callback function may be registered in an application (for example, the video application 301g) of the smartwatch 100, so that after the resource-rich device 20 verifies the server certificate and obtains the verification result, a certificate management module of the resource-rich device 20 sends the verification result to the certificate management module 302a of the smartwatch 100 by using a flexible bus or through Wi-Fi. After the certificate management module 302a of the smartwatch 100 receives the verification result, a call to the callback function is triggered, and the callback function returns the verification result to the application.

Step 817: The video application 301g of the smartwatch 100 determines, based on the verification result of the server certificate by the resource-rich device 20, whether the identity of the server 300 is valid. If the identity of the server 300 is valid, step 818 is performed; otherwise, the identity of the server 300 is invalid, and the video application 301g of the smartwatch 100 terminates an SSL connection to the server 300.

That is, when there is the resource-rich device 20 in the same network of the smartwatch 100, after the resource-rich device 20 verifies the identity of the server 300, the video application 301g of the smartwatch 100 determines whether to request the video service from the server 300.

Step 818: The video application 301g of the smartwatch 100 sends a video business request to the server 300 to request a video business service from the server 300. To be specific, after the video application 301g of the smartwatch 100 determines that the identity of the server 300 is valid, the video application 301g of the smartwatch 100 may request the video service from the server 300, and encrypted communication is performed between the smartwatch 100 and the server 300 by using a negotiated encryption algorithm.

With reference to the foregoing descriptions of FIG. 8A and FIG. 8B, it may be learned that, in the technical solutions of this application, when it is determined that there is another resource-rich device 20 in the same network, a root certificate preconfigured in a lightweight device 10 with relatively low computing power, for example, the smartwatch 100, may be transferred to the resource-rich device 20. When the lightweight device 10 interacts with the server 300, the server certificate is parsed by the resource-rich device 20. This can reduce resource usage of the lightweight device 10 generated in a process of parsing the server certificate, effectively use memory resources and computing resources of the resource-rich device 20, and avoid a waste of resources. In addition, operating power consumption of the lightweight device 10 can be reduced, and a battery life capability of the lightweight device 10 can be improved.

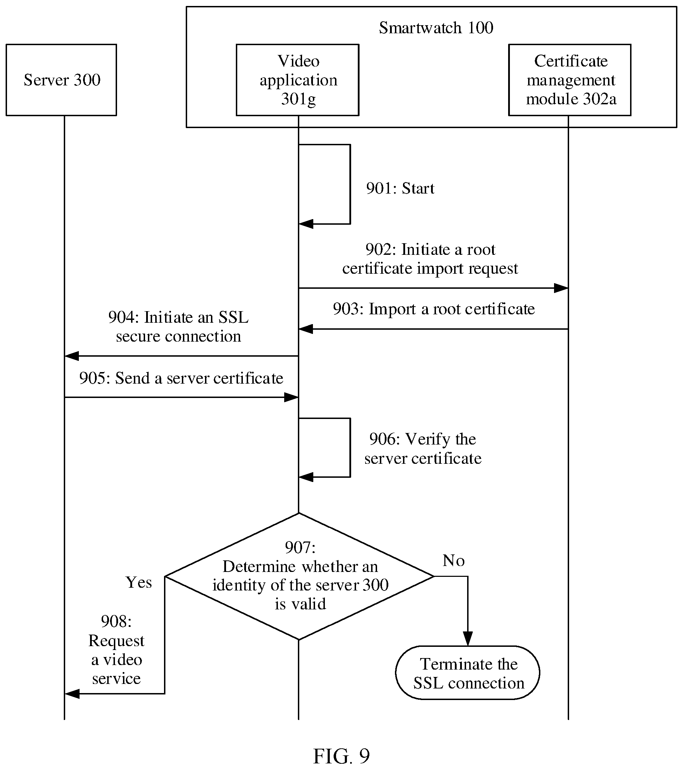

The following describes in detail the security authentication method provided in this application by using an example in which there is no resource-rich device 20 in a same network in which the smartwatch 100 is located, the smartwatch 100 directly verifies a server certificate, a secure connection is established between the smartwatch 100 and the server 300 by using an SSL protocol, and the smartwatch 100 requests a video service from the server 300. Specifically, refer to FIG. 9. A process of requesting the video service from the server 300 by the smartwatch 100 includes the following steps.

Step 901: The smartwatch 100 enables a video application 301g after detecting a user operation.

Step 902: The video application 301g of the smartwatch 100 initiates a root certificate import request to a certificate management module 302a of the smartwatch 100. In this case, the certificate management module 302a is requested to import a root certificate preconfigured in storage space of the smartwatch 100 into the enabled video application 301g, so that the video application 301g uses the root certificate to verify the server certificate delivered by the server 300 when requesting a service from the server 300. After receiving the root certificate import request, the certificate management module 302a of the smartwatch 100 simultaneously performs step 903 and step 904.

Step 903: The certificate management module 302a of the smartwatch 100 imports the root certificate preconfigured in the storage space of the smartwatch 100 into the enabled video application 301g.

Step 904: The video application 301g of the smartwatch 100 initiates an SSL secure connection to the server 300. In this case, when there is no resource-rich device 20 in the same network of the smartwatch 100, an SSL session between the video application 301g of the smartwatch 100 and the server 300 is enabled.

For example, in some embodiments, the video application 301g of the smartwatch 100 sends a handshake request message to the server 300, which includes a cipher suite, a data compression method, a random number, an extended field, and other information that are supported by the smartwatch 100, to notify the server 300 to enable the SSL session.

The server 300 sends a handshake request message of the server 300 to the smartwatch 100 in response to the handshake request message of the smartwatch 100. The message includes a cipher suite, a data compression method, a session ID, a random number, an extended field, and other information that are supported by the server 300.

Step 905: The server 300 sends the server certificate to the video application 301g of the smartwatch 100.

For example, in some embodiments, the server 300 sends the server certificate to the video application 301g of the smartwatch 100, and sends a handshake request done message, to notify the smartwatch 100 that an authentication preparation at the server 300 side is completed and a response from the smartwatch 100 is awaited.

Step 906: The video application 301g of the smartwatch 100 verifies the server certificate. To be specific, when there is no resource-rich device 20 in the same network of the smartwatch 100, the smartwatch 100 directly verifies an identity of the server 300.

For example, in some embodiments, the video application 301g of the smartwatch 100 verifies the server certificate by using a method similar to step 506 shown in FIG. 5. For details, refer to the foregoing text description about step 506 in FIG. 5. Details are not described herein again.

In some embodiments, the server certificate sent by the server 300 to the video application 301g of the smartwatch 100 is delivered in a form of a certificate chain, and a lowest-level certificate is a secondary certificate issued by the root certificate of the server 300. To verify the certificate chain delivered by the server 300, a root certificate corresponding to the certificate chain delivered by the server 300 needs to be preconfigured in the smartwatch 100, and the root certificate is used to verify the server certificate in the form of the certificate chain.

Step 907: The video application 301g of the smartwatch 100 determines whether the identity of the server 300 is valid. To be specific, when there is no resource-rich device 20 in the same network of the smartwatch 100, after the smartwatch 100 directly verifies the identity of the server 300, the video application 301g of the smartwatch 100 determines whether the identity of the server 300 is valid. If the identity of the server 300 is valid, step 908 is performed; otherwise, the identity of the server 300 is invalid, and the video application 301g of the smartwatch 100 terminates an SSL connection to the server 300.

To be specific, when there is no resource-rich device 20 in the same network of the smartwatch 100, after the smartwatch 100 verifies the identity of the server 300, the video application 301g of the smartwatch 100 determines whether to request the video service from the server 300.

Step 908: The video application 301g of the smartwatch 100 sends a video business request to the server 300 to request a video business service from the server 300. To be specific, after the video application 301g of the smartwatch 100 determines that the identity of the server 300 is valid, the video application 301g of the smartwatch 100 may request the video service from the server 300, and encrypted communication is performed between the smartwatch 100 and the server 300 by using a negotiated encryption algorithm.

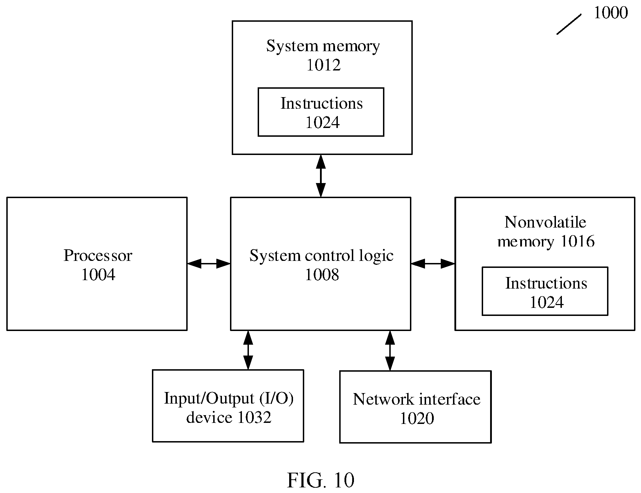

FIG. 10 is a schematic block diagram of a structure of a system 10000 according to some embodiments of this application. In some embodiments, the system 1000 may include one or more processors 1004, a system control logic 1008 connected to at least one of the processors 1004, a system memory 1012 connected to the system control logic 1008, a nonvolatile memory (NVM) 1016 connected to the system control logic 1008, and a network interface 1020 connected to the system control logic 1008.

In some embodiments, the processor 1004 may include one or more single-core or multi-core processors. In some embodiments, the processor 1004 may include any combination of a general-purpose processor and a dedicated processor (for example, a graphics processing unit, an application processor, or a baseband processor). In an embodiment in which the system 1000 uses an ENB (Evolved NodeB, evolved NodeB) 101 or a RAN (Radio Access Network, radio access network) controller, the processor 1004 may be configured to execute various compliant embodiments. For example, in the embodiments shown in FIG. 5 and FIG. 8A and FIG. 8B, the processor 1004 determines whether there is the access of the resource-rich device in the same network. If there is the access of the resource-rich device, the smartwatch 100 controls, by using the processor 1004, the smartwatch 100 to forward, to the resource-rich device, the server certificate delivered by the server 300 for parsing. When there is no access of the resource-rich device in the same network, the smartwatch 100 directly parses, by using the processor 1004, the server certificate delivered by the server 300.

In some embodiments, the system control logic 1008 may include any proper interface controller to provide any proper interface to the at least one of the processors 1004 and/or any proper device or component communicating with the system control logic 1008.

In some embodiments, the system control logic 1008 may include one or more memory controllers to provide an interface connected to the system memory 1012. The system memory 1012 may be configured to load and store data and/or instructions. For example, in some embodiments of this application, the system memory 1012 may store the root certificate delivered by the digital certificate authority for the smartwatch 100. In addition, the system memory 1012 may also store registration information, login information, and the like of a user.

The NVM/memory 1016 may include one or more tangible non-transitory computer-readable media that are configured to store data and/or instructions. In some embodiments, the NVM/memory 1016 may include any proper nonvolatile memory such as a flash memory and/or any proper nonvolatile storage device such as at least one of an HDD (Hard Disk Drive, hard disk drive), a CD (Compact Disc, compact disc) drive, and a DVD (Digital Versatile Disc, digital versatile disc) drive.

The NVM/memory 1016 may include some of storage resources on an apparatus in which the system 1000 is installed, or may be accessed by a device, but not necessarily a part of the device. For example, the NVM/memory 1016 may be accessed over a network through the network interface 1020.

In particular, the system memory 1012 and the NVM/memory 1016 may respectively include temporary copies and permanent copies of instructions 1024. The instructions 1024 may include instructions, when being executed by the at least one of the processors 1004, that enable the system 1000 to implement the method shown in FIG. 5, FIG. 8A and FIG. 8B, and FIG. 9. In some embodiments, the instructions 1024, hardware, firmware, and/or software components thereof may additionally/alternatively be deployed in the system control logic 1008, the network interface 1020, and/or the processor 1004.

The network interface 1020 may include a transceiver configured to provide a radio interface for the system 1000, to communicate with any other proper device (for example, a front-end module and an antenna) over one or more networks. In some embodiments, the network interface 1020 may be integrated with other components of the system 1000. For example, the network interface 1020 may be integrated into at least one of the processor 1004, the system memory 1012, the NVM/memory 1016, and a firmware device (not shown) with instructions. When the at least one of the processors 1004 executes the instructions, the system 1000 implements the method shown in FIG. 5, FIG. 8A and FIG. 8B, and FIG. 9.

The network interface 1020 may further include any proper hardware and/or firmware to provide a multi-input and multi-output radio interface. For example, the network interface 1020 may be a network adapter, a wireless network adapter, a phone modem, and/or a wireless modem.

In some embodiments, the at least one of the processors 1004 may be packaged together with logic of one or more controllers used for the system control logic 1008 to form a system in package (SiP). In some embodiments, the at least one of the processors 1004 may be integrated on a same tube core with logic of one or more controllers used for the system control logic 1008, to form a system on chip (System on Chip, SoC).

The system 1000 may further include an input/output (I/O) device 1032. The I/O device 1032 may include a user interface through which the user can interact with the system 1000, and a peripheral component interface through which a peripheral component can also interact with the system 1000.

In some embodiments, the user interface may include but is not limited to a display (for example, a liquid crystal display or a touchscreen display), a speaker, a microphone, one or more cameras (for example, a still image camera and/or a video camera), a flashlight (for example, a light-emitting diode flashlight), and a keyboard.

In some embodiments, the peripheral component interface may include but is not limited to a nonvolatile memory port, an audio jack, and a charging port.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions, to perform functions described in this application and generate output information. The output information may be applied to one or more output devices in a known manner. For a purpose of this application, a processing system includes any system that has a processor such as a digital signal processor (Digital Signal Processor, DSP), a microcontroller, an application-specific integrated circuit (Application-Specific Integrated Circuit, ASIC), or a microprocessor.

The program code may be implemented in an advanced programming language or an object-oriented programming language to communicate with the processing system. The program code may also be implemented in an assembly language or a machine language when needed. Actually, the mechanisms described in this application are not limited to a scope of any particular programming language. In either case, the language may be a compiled language or an interpreted language.

In some cases, the disclosed embodiments may be implemented by hardware, firmware, software, or any combination thereof. The disclosed embodiments may alternatively be implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a compact disc read-only memory (CD-ROM), a magneto-optical disc, a read-only memory (Read Only Memory, ROM), a random access memory (Random Access Memory, RAM), an erasable programmable read-only memory (Erasable Programmable Read Only Memory, EPROM), an electrically erasable programmable read-only memory (Electrically Erasable Programmable Read-Only Memory, EEPROM), a magnetic or an optical card, a flash memory, or a tangible machine-readable memory that is configured to transmit information through internet by using electricity, light, sound, or another form of propagating signal (for example, a carrier, an infrared signal, or a digital signal). Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or sequence. However, it should be understood that the specific arrangement and/or sorting may not be necessary. Rather, in some embodiments, these features may be arranged in a manner and/or sequence different from that shown in the illustrative drawings. In addition, structural or method features included in a particular drawing do not imply that such features are required in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not the most important, and a combination of functions implemented by these logical units/modules is a key to resolving technical problems proposed in this application. In addition, to highlight an innovative part of this application, a unit/module that is not closely related to resolving the technical problems proposed in this application is not introduced in the foregoing device embodiments of this application. This does not indicate that there is not another unit/module in the foregoing device embodiments.

It should be noted that, in examples and this specification of this patent, relational terms such as first and second are only used to distinguish one entity or operation from another entity or operation, and do not necessarily require or imply that any actual relationship or sequence exists between these entities or operations. In addition, terms "include", "comprise", or any other variations thereof are intended to cover non-exclusive including, so that a process, a method, an article, or a device including a series of elements not only includes those elements, but also includes other elements that are not explicitly listed, or also includes inherent elements of the process, the method, the article, or the device. An element preceded by "includes a" does not, without more constraints, preclude the presence of additional identical elements in the process, the method, the article, or the device that includes the element.

Although this application has been illustrated and described with reference to some preferred embodiments of this application, a person of ordinary skill in the art should understand that various changes may be made to this application in form and detail without departing from the scope of this application.

## Claims

1. A security authentication method, comprising:
detecting, by a first electronic device (10; 100), a trigger event triggering data transmission with a server (300);
determining, by the first electronic device (10; 100), whether there is a second electronic device (20) with an identity verification capability greater than that of the first electronic device (10; 100) in a same network to which the first electronic device (10; 100) belongs, wherein the identity verification capability is obtained based on at least one of computing power and a storage capability;
when determining that there is a second electronic device (20) with an identity verification capability greater than that of the first electronic device (10; 100) in the same network:
sending, by the first electronic device (10; 100), identity information of the server (300) to the second electronic device (20); and
receiving, by the first electronic device (10; 100), a verification result from the second electronic device (20); and
when determining that there is no second electronic device (20) with an identity verification capability greater than that of the first electronic device (10; 100) in the same network:
verifying, by the first electronic device (10; 100), the identity information of the server (300) to obtain a verification result; and
determining, by the first electronic device (10; 100) based on the verification result, whether to perform the data transmission with the server (300).

2. The security authentication method according to claim 1, further comprising after the step of sending, by the first electronic device (10; 100), identity information of the server (300) to the second electronic device (20):
verifying, by the second electronic device (20), the identity information of the server (300) received from the first electronic device (10; 100), and sending a verification result to the first electronic device (10; 100).

3. The method according to claim 2, wherein the verifying, by the second electronic device (20), the identity information of the server (300) received from the first electronic device (10; 100) comprises:
verifying, by the second electronic device (20), the identity information of the server (300) based on a root certificate received from the first electronic device (10; 100).

4. The method according to claim 3, wherein the first electronic device (10; 100) comprises a plurality of applications;
the detecting, by a first electronic device (10; 100), a trigger event triggering data transmission with a server (300) comprises: detecting, by at least one of the plurality of applications of the first electronic device (10; 100), the trigger event triggering the data transmission with the server (300); and
the method further comprises:
when detecting the trigger event triggering the data transmission with the server (300), obtaining, by the at least one of the plurality of applications of the first electronic device (10; 100), the root certificate, and sending the root certificate to the second electronic device (20).

5. The method according to claim 3 or 4, wherein the identity information of the server (300) comprises a server certificate issued by a digital certificate authority to the server (300), and the verification result of the second electronic device (20) for the identity information of the server (300) is obtained in the following manner:
verifying, by the second electronic device (20) based on the root certificate received from the first electronic device (10; 100), the server certificate received from the first electronic device (10; 100), to obtain the verification result of the second electronic device (20) for the server certificate.

6. The method according to any one of claims 1 to 5, wherein the detecting, by a first electronic device (10; 100), a trigger event triggering data transmission with a server (300) comprises:
detecting, by the first electronic device (10; 100), a user operation triggering the data transmission with the server (300), wherein the user operation is used to trigger the first electronic device (10; 100) to send a network secure connection request to the server (300).

7. The method according to claim 6, wherein the determining, by the first electronic device (10; 100) based on the verification result, whether to perform the data transmission with the server (300) comprises:
establishing, by the first electronic device (10; 100), a network secure connection to the server (300) when determining, based on the verification result, that an identity of the server (300) is valid; and
performing, by the first electronic device (10; 100), the data transmission with the server (300) by using the established network secure connection.

8. The method according to claim 7, wherein the network secure connection is a secure socket layer protocol connection or a transport layer security protocol connection.

9. The method according to any one of claims 1 to 8, wherein an operating system of the first electronic device (10; 100) is a lightweight embedded operating system.

10. An electronic device (1000), comprising:
a memory (1012), configured to store instructions executed by one or more processors (1004) of the electronic device (1000); and
a processor (1004), wherein the processor (1004) is one of the processors (1004) of the electronic device and is configured to perform the security authentication method according to claim 1.

## Patentansprüche

1. Sicherheitsauthentifizierungsverfahren, umfassend:
Erkennen eines Auslöseereignisses durch eine erste elektronische Vorrichtung (10; 100), das eine Datenübertragung mit einem Server (300) auslöst;
Bestimmen, durch die erste elektronische Vorrichtung (10; 100), ob sich in demselben Netzwerk, zu dem die erste elektronische Vorrichtung (10; 100) gehört, eine zweite elektronische Vorrichtung (20) mit einer höheren Fähigkeit zur Identitätsprüfung als die erste elektronische Vorrichtung (10; 100) befindet, wobei die Fähigkeit zur Identitätsprüfung basierend auf mindestens einer von Rechenleistung und einer Speicherfähigkeit erhalten wird;
wenn bestimmt wird, dass sich in demselben Netzwerk eine zweite elektronische Vorrichtung (20) mit einer höheren Fähigkeit zur Identitätsprüfung als die erste elektronische Vorrichtung (10; 100) befindet:
Senden von Identitätsinformationen des Servers (300) durch die erste elektronische Vorrichtung (10; 100) an die zweite elektronische Vorrichtung (20); und
Empfangen eines Prüfergebnisses von der zweiten elektronischen Vorrichtung (20) durch die erste elektronische Vorrichtung (10; 100); und
wenn bestimmt wird, dass sich in demselben Netzwerk keine zweite elektronische Vorrichtung (20) mit einer höheren Fähigkeit zur Identitätsprüfung als die erste elektronische Vorrichtung (10; 100) befindet:
Prüfen der Identitätsinformationen des Servers (300) durch die erste elektronische Vorrichtung (10; 100), um ein Prüfergebnis zu erhalten; und
Bestimmen, durch die erste elektronische Vorrichtung (10; 100) basierend auf dem Prüfergebnis, ob die Datenübertragung mit dem Server (300) durchgeführt werden soll.

2. Sicherheitsauthentifizierungsverfahren nach Anspruch 1, ferner umfassend nach dem Schritt des Sendens von Identitätsinformationen des Servers (300) durch die erste elektronische Vorrichtung (10; 100) an die zweite elektronische Vorrichtung (20):
Prüfen der Identitätsinformationen des Servers (300) durch die zweite elektronische Vorrichtung (20), die von der ersten elektronischen Vorrichtung (10; 100) empfangen wurden, und Senden eines Prüfergebnisses an die erste elektronische Vorrichtung (10; 100).

3. Verfahren nach Anspruch 2, wobei das Prüfen der von der ersten elektronischen Vorrichtung (10; 100) empfangenen Identitätsinformationen des Servers (300) durch die zweite elektronische Vorrichtung (20) Folgendes umfasst:
Prüfen der Identitätsinformationen des Servers (300) durch die zweite elektronische Vorrichtung (20) basierend auf einem Stammzertifikat, das von der ersten elektronischen Vorrichtung (10; 100) empfangen wurde.

4. Verfahren nach Anspruch 3, wobei die erste elektronische Vorrichtung (10; 100) eine Vielzahl von Anwendungen umfasst;
das Erkennen eines Auslöseereignisses, das die Datenübertragung mit einem Server (300) auslöst, durch eine erste elektronische Vorrichtung (10; 100) Folgendes umfasst: Erkennen des Auslöseereignisses, das die Datenübertragung mit dem Server (300) auslöst, durch mindestens eine der Vielzahl von Anwendungen der ersten elektronischen Vorrichtung (10; 100); und
wobei das Verfahren ferner Folgendes umfasst:
bei Erkennen des Auslöseereignisses, das die Datenübertragung mit dem Server (300) auslöst, Erhalten des Stammzertifikats durch mindestens eine der Vielzahl von Anwendungen der ersten elektronischen Vorrichtung (10; 100) und Senden des Stammzertifikats an die zweite elektronische Vorrichtung (20).

5. Verfahren nach Anspruch 3 oder 4, wobei die Identitätsinformationen des Servers (300) ein Serverzertifikat umfassen, das durch eine digitale Zertifizierungsstelle für den Server (300) ausgestellt wurde, und das Prüfergebnis der zweiten elektronischen Vorrichtung (20) für die Identitätsinformationen des Servers (300) auf folgende Weise erhalten wird:
Prüfen des Serverzertifikats durch die zweite elektronische Vorrichtung (20) basierend auf dem von der ersten elektronischen Vorrichtung (10; 100) empfangenen Stammzertifikat, um das Prüfergebnis des Serverzertifikats durch die zweite elektronische Vorrichtung (20) zu erhalten.

6. Verfahren nach einem der Ansprüche 1 bis 5, wobei das Erkennen eines Auslöseereignisses, das die Datenübertragung mit einem Server (300) auslöst, durch eine erste elektronische Vorrichtung (10; 100) Folgendes umfasst:
Erkennen, durch die erste elektronische Vorrichtung (10; 100), eines Benutzervorgangs, der die Datenübertragung mit dem Server (300) auslöst, wobei der Benutzervorgang verwendet wird, um das Senden einer Anfrage für eine sichere Netzwerkverbindung an den Server (300) durch die erste elektronische Vorrichtung (10; 100) auszulösen.

7. Verfahren nach Anspruch 6, wobei das Bestimmen durch die erste elektronische Vorrichtung (10; 100) basierend auf dem Prüfergebnis, ob die Datenübertragung mit dem Server (300) durchgeführt werden soll, Folgendes umfasst:
Herstellen einer sicheren Netzwerkverbindung zum Server (300) durch die erste elektronische Vorrichtung (10; 100), nachdem anhand des Prüfergebnisses bestimmt wurde, dass die Identität des Servers (300) gültig ist; und
Durchführen der Datenübertragung mit dem Server (300) durch die erste elektronische Vorrichtung (10; 100) unter Verwendung der hergestellten sicheren Netzwerkverbindung.

8. Verfahren nach Anspruch 7, wobei es sich bei der sicheren Netzwerkverbindung um eine sichere Socketschicht-Protokollverbindung oder eine Transportschicht-Protokollverbindung handelt.

9. Verfahren nach einem der Ansprüche 1 bis 8, wobei es sich bei dem Betriebssystem der ersten elektronischen Vorrichtung (10; 100) um ein schlankes eingebettetes Betriebssystem handelt.

10. Elektronische Vorrichtung (1000), umfassend:
einen Speicher (1012), der dazu konfiguriert ist, Anweisungen zu speichern, die durch einen oder mehrere Prozessoren (1004) der elektronischen Vorrichtung (1000) ausgeführt werden; und
einen Prozessor (1004), wobei der Prozessor (1004) einer der Prozessoren (1004) der elektronischen Vorrichtung ist und so konfiguriert ist, dass er das Sicherheitsauthentifizierungsverfahren nach Anspruch 1 durchführt.

## Revendications

1. Procédé d'authentification de sécurité, comprenant :
la détection, par un premier dispositif électronique (10 ; 100), d'un événement déclencheur déclenchant une transmission de données avec un serveur (300) ;
le fait de déterminer, par le du premier dispositif électronique (10 ; 100), s'il existe un second dispositif électronique (20) avec une capacité de vérification d'identité supérieure à celle du premier dispositif électronique (10 ; 100) dans un même réseau auquel le premier dispositif électronique (10 ; 100) appartient, dans lequel la capacité de vérification d'identité est obtenue sur la base d'au moins l'une d'une puissance de calcul et d'une capacité de stockage ;
lorsqu'il est déterminé qu'il existe un second dispositif électronique (20) avec une capacité de vérification d'identité supérieure à celle du premier dispositif électronique (10 ; 100) dans le même réseau :
l'envoi, par le premier dispositif électronique (10 ; 100), d'informations d'identité du serveur (300) au second dispositif électronique (20) ; et
la réception, par le premier dispositif électronique (10 ; 100), d'un résultat de vérification provenant du second dispositif électronique (20) ; et
lorsqu'il est déterminé qu'il n'existe pas de second dispositif électronique (20) avec une capacité de vérification d'identité supérieure à celle du premier dispositif électronique (10 ; 100) dans le même réseau :
la vérification, par le premier dispositif électronique (10 ; 100), des informations d'identité du serveur (300) pour obtenir un résultat de vérification ; et
le fait de déterminer, par le du premier dispositif électronique (10 ; 100) sur la base du résultat de vérification, s'il faut réaliser la transmission de données avec le serveur (300).

2. Procédé d'authentification de sécurité selon la revendication 1, comprenant également, après l'étape d'envoi, par le premier dispositif électronique (10 ; 100), des informations d'identité du serveur (300) au second dispositif électronique (20) :
la vérification, par le second dispositif électronique (20), des informations d'identité du serveur (300) reçues à partir du premier dispositif électronique (10 ; 100), et l'envoi d'un résultat de vérification au premier dispositif électronique (10 ; 100).

3. Procédé selon la revendication 2, dans lequel la vérification, par le second dispositif électronique (20), des informations d'identité du serveur (300) reçues à partir du premier dispositif électronique (10 ; 100) comprend :
la vérification, par le second dispositif électronique (20), des informations d'identité du serveur (300) sur la base d'un certificat racine reçu à partir du premier dispositif électronique (10 ; 100).

4. Procédé selon la revendication 3, dans lequel le premier dispositif électronique (10 ; 100) comprend une pluralité d'applications ;
la détection, par un premier dispositif électronique (10 ; 100), d'un événement déclencheur déclenchant une transmission de données avec un serveur (300) comprend : la détection, par au moins l'une de la pluralité d'applications du premier dispositif électronique (10 ; 100), de l'événement déclencheur déclenchant la transmission de données avec le serveur (300) ; et
le procédé comprend également :
lors de la détection de l'événement déclencheur déclenchant la transmission de données avec le serveur (300), l'obtention, par l'au moins l'une de la pluralité d'applications du premier dispositif électronique (10 ; 100), du certificat racine, et l'envoi du certificat racine au second dispositif électronique (20).

5. Procédé selon la revendication 3 ou 4, dans lequel les informations d'identité du serveur (300) comprennent un certificat de serveur délivré par une autorité de certification numérique au serveur (300), et le résultat de vérification du second dispositif électronique (20) pour les informations d'identité du serveur (300) est obtenu de la manière suivante :
la vérification, par le second dispositif électronique (20) sur la base du certificat racine reçu à partir du premier dispositif électronique (10 ; 100), du certificat de serveur reçu à partir du premier dispositif électronique (10 ; 100), pour obtenir le résultat de vérification du second dispositif électronique (20) pour le certificat de serveur.

6. Procédé selon l'une quelconque des revendications 1 à 5, dans lequel la détection, par un premier dispositif électronique (10 ; 100), d'un événement déclencheur déclenchant la transmission de données avec un serveur (300) comprend :
la détection, par le premier dispositif électronique (10 ; 100), d'une opération utilisateur déclenchant la transmission de données avec le serveur (300), dans lequel l'opération utilisateur est utilisée pour déclencher le premier dispositif électronique (10 ; 100) pour envoyer une demande de connexion réseau sécurisée au serveur (300).

7. Procédé selon la revendication 6, dans lequel le fait de déterminer, par le du premier dispositif électronique (10 ; 100) sur la base du résultat de vérification, s'il faut réaliser la transmission de données avec le serveur (300) comprend :
l'établissement, par le premier dispositif électronique (10 ; 100), d'une connexion réseau sécurisée au serveur (300) lors de la détermination, sur la base du résultat de vérification, qu'une identité du serveur (300) est valide ; et
la réalisation, par le premier dispositif électronique (10 ; 100), de la transmission de données avec le serveur (300) en utilisant la connexion réseau sécurisée établie.

8. Procédé selon la revendication 7, dans lequel la connexion réseau sécurisée est une connexion de protocole de couche de prise sécurisée ou une connexion de protocole de sécurité de couche de transport.

9. Procédé selon l'une quelconque des revendications 1 à 8, dans lequel un système d'exploitation du premier dispositif électronique (10 ; 100) est un système d'exploitation embarqué léger.

10. Dispositif électronique (1000), comprenant :
une mémoire (1012), configurée pour stocker des instructions exécutées par un ou plusieurs processeurs (1004) du dispositif électronique (1000) ; et
un processeur (1004), dans lequel le processeur (1004) est l'un des processeurs (1004) du dispositif électronique et est configuré pour réaliser le procédé d'authentification de sécurité selon la revendication 1.
